# EUROPEAN PATENT APPLICATION

(11) **EP 4 848 466 A1**
(43) Date of publication of application: **02.12.2026**
(21) Application number: 24958871.6
(22) Date of filing: 29.10.2024
(51) Int. Cl.: H01M 50/593, H01M 50/188, H01M 50/191

(54) **BATTERY CELL, BATTERY DEVICE, AND ELECTRIC DEVICE**

(71) Applicant: CONTEMPORARY AMPEREX TECHNOLOGY (HONG KONG) LIMITED, Hong Kong (HK)
(72) Inventor: CAO, Mengkai, Ningde, Fujian 352100 (CN); GUO, Zhijun, Ningde, Fujian 352100 (CN); GE, Xiaoming, Ningde, Fujian 352100 (CN); SHAN, Axiang, Ningde, Fujian 352100 (CN); WU, Guangjin, Ningde, Fujian 352100 (CN); YE, Guoqing, Ningde, Fujian 352100 (CN); WU, Zhiyang, Ningde, Fujian 352100 (CN); ZHAO, Fenggang, Ningde, Fujian 352100 (CN); WU, Siping, Ningde, Fujian 352100 (CN); XIAO, Wentao, Ningde, Fujian 352100 (CN)
(74) Representative: Kraus & Lederer PartGmbB
(86) International application number: PCT/CN2024/128154
(87) International publication number: WO 2026/090849

(57) **Abstract**

The present application provides a battery cell, a battery device, and an electric device. The battery cell comprises a housing, an electrode terminal, an electrode assembly, and a first insulating member. The housing comprises a first wall and an accommodation cavity, and the first wall is provided with an electrode lead-out hole communicating with the accommodation cavity. The electrode terminal is disposed in the electrode lead-out hole. The electrode assembly is accommodated in the accommodation cavity, the electrode assembly comprises a first tab and a second tab having opposite polarities, the first tab is electrically connected to the electrode terminal, and the second tab is electrically connected to the first wall. At least a portion of the first insulating member is fixed between the electrode terminal and the first wall to insulate and isolate at least a portion of the electrode terminal from the first wall, and the thermal weight loss temperature of the first insulating member is greater than or equal to 300°C.

## Description

### TECHNICAL FIELD

The present application relates to the field of battery technologies, and more specifically, to a battery cell, a battery device, and an electric device.

### BACKGROUND

Battery cells are widely used in electronic devices such as mobile phones, notebook computers, electric bicycles, electric vehicles, electric aircrafts, electric boats, electric toy cars, electric toy boats, electric toy aircrafts, and electric tools.

During the development of battery technologies, how to improve the reliability of a battery cell is a research direction in battery technologies.

### SUMMARY

The present application provides a battery cell, a battery device, and an electric device, to improve reliability.

According to a first aspect, an embodiment of the present application provides a battery cell, including a housing, an electrode terminal, an electrode assembly, and a first insulating member. The housing includes a first wall and an accommodating cavity, where the first wall is provided with an electrode lead-out hole in communication with the accommodating cavity. The electrode terminal is disposed in the electrode lead-out hole. The electrode assembly is accommodated in the accommodating cavity, where the electrode assembly includes a first tab and a second tab that have opposite polarities, the first tab is electrically connected to the electrode terminal, and the second tab is electrically connected to the first wall. At least a part of the first insulating member is fixed between the electrode terminal and the first wall, to insulate and isolate at least a part of the electrode terminal from the first wall, and a thermal weight loss temperature of the first insulating member is greater than or equal to 300°C.

When the battery cell undergoes thermal runaway due to an internal short circuit or for another reason, the battery cell may maintain a high-temperature state for a period of time. The thermal weight loss temperature of the first insulating member is greater than or equal to 300°C. The first insulating member is not prone to weight loss or has minimal weight loss during thermal runaway of the battery cell, so that the first insulating member can be kept between the first wall and the electrode terminal, to reduce a risk of conduction between the electrode terminal and the first wall. Correspondingly, even if the electrode terminal and the first wall are electrically connected to another battery cell or an external power supply, the first insulating member can suppress a current between the electrode terminal and the first wall, reduce continuous heat generation of the electrode terminal and the first wall, reduce thermal impact on another surrounding battery cell, reduce a risk that the another battery cell undergoes thermal runaway, and improve reliability.

In some embodiments, the thermal weight loss temperature of the first insulating member is greater than or equal to 350°C, and optionally, the thermal weight loss temperature of the first insulating member is greater than or equal to 500°C. In the embodiments of the present application, a weight loss rate of the first insulating member during thermal runaway of the battery cell can be further reduced, a risk of failure of the first insulating member is reduced, continuous heat generation of the electrode terminal and the first wall is reduced, thermal impact on another surrounding battery cell is reduced, a risk that the another battery cell undergoes thermal runaway is reduced, and reliability is improved.

In some embodiments, a material of the first insulating member includes a thermosetting material. The thermosetting material has excellent heat resistance, can maintain relatively good stability at a high temperature, and is not likely to soften, be deformed, or decompose. During thermal runaway of the battery cell, an internal pressure of the housing increases, causing a risk of deformation of the first wall. When the first wall is deformed, a pressure exerted on the first insulating member increases, and the first insulating member including the thermosetting material is not likely to soften at a high temperature. In this way, deformation of the first insulating member under the pressure can be reduced, and a risk that the first insulating member is partially thinned and is penetrated is reduced, to improve insulation performance, reduce a risk of an insulation failure, and improve reliability.

In some embodiments, the material of the first insulating member includes one or more of thermosetting polyimide and a derivative of thermosetting polyimide. The thermosetting polyimide has excellent heat resistance. During thermal runaway of the battery cell, the first insulating member including the thermosetting polyimide maintains good performance stability in a high-temperature environment, and the first insulating member is not prone to weight loss or has minimal weight loss, to reduce a risk of an insulation failure.

In some embodiments, the material of the first insulating member includes one or more of bismaleimide, ethynyl-terminated polyimide, and norbornene dicarboxylic anhydride-terminated polyimide. The bismaleimide, the ethynyl-terminated polyimide, and the norbornene dicarboxylic anhydride-terminated polyimide have advantages such as excellent high-temperature resistance, a high mechanical strength, and strong chemical resistance.

In some embodiments, the first insulating member is bonded to at least one of the electrode terminal and the first wall. That the first insulating member is bonded to the electrode terminal and/or the first wall can improve stability of the first insulating member, and reduce offset of the first insulating member when the battery cell suffers from an external impact, to reduce a risk of an insulation failure. A bonding process is easy to implement, and a bonding interface is well sealed.

In some embodiments, the battery cell further includes a bonding layer. The first insulating member is bonded to a surface of the first wall through the bonding layer, and/or the first insulating member is bonded to a surface of the electrode terminal through the bonding layer. The first insulating member may be fixed through the bonding layer, to reduce a risk of offset of the first insulating member in a use process of the battery cell.

In some embodiments, a thickness of the first insulating member is greater than or equal to a thickness of the bonding layer. Compared with the bonding layer, the first insulating member may have a relatively large thickness, to reduce a risk that the first insulating member is cracked and penetrated, and improve insulation reliability.

In some embodiments, a ratio of the thickness t5 of the first insulating member to the thickness t6 of the bonding layer is 1 to 5. t5/t6 is limited to be greater than or equal to 1, so that the first insulating member may have a relatively large thickness, to reduce a risk that the first insulating member is cracked and penetrated, and improve the insulation reliability. t5/t6 is limited to be less than or equal to 5, so that the bonding layer has a relatively high bonding strength, to reduce a risk that the first insulating member falls out.

In some embodiments, the first insulating member is bonded to the first wall. Compared with the electrode terminal, the first wall usually has a simple and relatively flat structure. That the first insulating member is bonded to the first wall can improve a form of a bonding interface and improve bonding stability of the first insulating member.

In some embodiments, in the thickness direction of the first wall, at least a part of the first insulating member is located between an outer surface of the first wall and the electrode terminal. At least a part of the first insulating member is located on an outer side of the first wall, and the first insulating member may separate a part of the electrode terminal that is located on the outer side of the first wall from the first wall. When high-temperature particles emitted by another battery cell are splashed onto the first insulating member, the first insulating member has relatively good heat resistance, and the first insulating member is not likely to fail under the action of the high-temperature particles, to reduce a risk of a short circuit of the battery cell.

In some embodiments, in the thickness direction of the first wall, at least a part of the first insulating member is located between an inner surface of the first wall and the electrode terminal.

In some embodiments, the first insulating member includes a first insulating portion and a second insulating portion connected to the first insulating portion, the first insulating portion is disposed on the outer surface of the first wall, and the second insulating portion is disposed on a hole wall surface of the electrode lead-out hole. The first insulating member may cover a joint between the outer surface of the first wall and the hole wall surface, to reduce, when the first wall protrudes outward and is deformed, a risk that the joint between the outer surface of the first wall and the hole wall surface is in contact with the electrode terminal.

In some embodiments, the battery cell further includes a second insulating member. At least a part of the second insulating member is disposed between the first insulating member and the first wall; and/or at least a part of the second insulating member is disposed between the first insulating member and the electrode terminal. The first insulating member and the second insulating member are disposed, so that a double-layer insulating structure may be formed between the first wall and the electrode terminal, to further improve an insulation effect, and reduce a risk of conduction between the first wall and the electrode terminal during thermal runaway of the battery cell.

In some embodiments, a compression modulus of the second insulating member is less than a compression modulus of the first insulating member. During use of the battery cell, the first wall may be deformed due to a change of an internal pressure of the battery cell. Particularly, during thermal runaway of the battery cell, an internal pressure of the housing rapidly increases, which may also cause the first wall to protrude outward and be deformed. The compression modulus of the second insulating member is relatively small, so that when the first wall is deformed, the second insulating member may release a stress through compression and deformation, to reduce a stress exerted on the first insulating member, and reduce a risk of cracking of the first insulating member and a risk of an insulation failure.

In some embodiments, a material of the second insulating member includes a thermoplastic material. The second insulating member including the thermoplastic material is easily formed, and a shape of the second insulating member can fit an electrode terminal having a complex structure. When subject to an external force, the second insulating member including the thermoplastic material may be deformed to some extent and is not easy to break, and has relatively good toughness and impact resistance, thereby improving an insulation effect.

In some embodiments, in the thickness direction of the first wall, at least a part of the first insulating member and at least a part of the second insulating member are stacked between the first wall and the electrode terminal. To implement fixing between the electrode terminal and the first wall, generally, there is an interaction force between the electrode terminal and the first wall along the thickness direction. At least a part of the first insulating member and at least a part of the second insulating member are stacked along the thickness direction. This can reduce a risk of an insulation failure.

In some embodiments, in the thickness direction of the first wall, at least a part of the second insulating member is disposed between the first insulating member and the electrode terminal. In a process in which the electrode terminal is mounted on the first wall, the electrode terminal usually needs to be pressed against the first wall. The second insulating member may separate the first insulating member from the electrode terminal, to reduce a force exerted on the first insulating member in a process of mounting the electrode terminal, reduce a risk that the first insulating member is cracked, and improve an insulation effect.

In some embodiments, the electrode terminal includes a terminal body, a first limiting portion, and a second limiting portion, at least a part of the terminal body is accommodated in the electrode lead-out hole, both the first limiting portion and the second limiting portion are connected to the terminal body, at least a part of the first limiting portion protrudes from an outer peripheral surface of the terminal body, and at least a part of the second limiting portion protrudes from the outer peripheral surface of the terminal body. At least a part of the first insulating member is attached to a surface of the first wall that faces the first limiting portion. In the thickness direction of the first wall, the first limiting portion and the second limiting portion are respectively located on two sides of the first wall, and at least a part of the second insulating member is disposed between the first limiting portion and the first insulating member. To improve stability of the electrode terminal, the first limiting portion and the second limiting portion may clamp the first wall from two sides. The second insulating member may separate the first insulating member from the first limiting portion, to reduce a pressure exerted by the first limiting portion on the first insulating member, reduce a risk that the first insulating member is cracked, and improve an insulation effect.

In some embodiments, the electrode terminal is riveted to the first wall; and the first limiting portion is configured to be formed after the electrode terminal passes through the electrode lead-out hole. In a forming process of the first limiting portion, the second insulating member may separate the first limiting portion from the first insulating member, to reduce an action force transmitted to the first insulating member, reduce a risk that the first insulating member is cracked, and improve an insulation effect.

In some embodiments, in the thickness direction of the first wall, a minimum thickness of the part of the first insulating member that is located between the first wall and the electrode terminal is t1, a minimum thickness of the part of the second insulating member that is located between the first wall and the electrode terminal is t2, and t2 is greater than t1. The second insulating member having a relatively large thickness is disposed, to increase a creepage distance between the first wall and the electrode terminal, thereby improving insulation performance. The first insulating member having a relatively high thermal weight loss temperature may have a relatively small thickness, to reduce forming difficulty of the first insulating member and reduce costs.

In some embodiments, the battery cell further includes a pressure relief mechanism disposed in the housing. During thermal runaway of the battery cell, the pressure relief mechanism may release an internal temperature and an internal pressure of the battery cell, to reduce a risk of explosion of the battery cell.

In some embodiments, the pressure relief mechanism includes the pressure relief portion and the weak portion disposed around the outer periphery of the pressure relief portion. An area of the pressure relief portion is greater than an area of the electrode lead-out hole. Compared with the electrode lead-out hole, the pressure relief portion may have a relatively large area. In this way, during thermal runaway of the battery cell, the internal temperature and the internal pressure of the battery cell can be quickly released. Compared with the pressure relief portion, the electrode lead-out hole may have a relatively small area. In this way, impact of the electrode lead-out hole on a strength of the first wall can be reduced, deformation of a part of the first wall that is close to the electrode lead-out hole is reduced, and a risk of failure of the first insulating member is reduced.

In some embodiments, the housing includes a second wall, and the pressure relief mechanism is disposed on the second wall. The electrode terminal and the pressure relief mechanism are disposed on different walls, to reduce impact on the first insulating member during thermal runaway of the battery cell, and reduce a risk of failure of the first insulating member.

In some embodiments, the pressure relief mechanism includes the pressure relief portion and the weak portion disposed around the outer periphery of the pressure relief portion. An area of a region enclosed by an outer contour of a projection of the second wall along a thickness direction of the second wall is S1, and an area of a projection of the pressure relief portion in the thickness direction of the second wall is S2; and 0.1≤S2/S1≤0.8.

S2/S1 is limited to be greater than or equal to 0.1, so that during thermal runaway of the battery cell, a relatively large pressure relief channel may be formed in the pressure relief mechanism, to improve a rate of releasing an internal temperature and an internal pressure of the battery cell, and reduce a risk of explosion of the battery cell. S2/S1 is limited to be greater than or equal to 0.1, so that time of the first insulating member in a high-temperature environment can be further shortened, weight loss of the first insulating member is reduced, a risk of an insulation failure is reduced, and reliability of the battery cell is improved. S2/S1 is limited to be less than or equal to 0.8, so that a range of the weak portion may be limited, impact of setting the weak portion on a strength of the second wall is reduced, a risk that the weak portion is cracked in a normal use process of the battery cell is reduced, and reliability of the battery cell is improved.

In some embodiments, 0.3≤S2/S1≤0.7, which may further improve the reliability of the battery cell.

In some embodiments, the battery cell is a cylindrical battery cell, and the first wall and the second wall are disposed opposite to each other along an axial direction of the cylindrical battery cell. The pressure relief mechanism includes the pressure relief portion and the weak portion disposed around the outer periphery of the pressure relief portion, and the pressure relief portion is in a shape of a circle. A diameter ϕ1 of the pressure relief portion and a diameter ϕ2 of the cylindrical battery cell satisfy the following relationship: 0.35≤ϕ1/ϕ2≤0.85.

ϕ1/ϕ2 is limited to be greater than or equal to 0.35, so that during thermal runaway of the battery cell, a relatively large pressure relief channel may be formed in the pressure relief mechanism, to improve a rate of releasing an internal temperature and an internal pressure of the battery cell, and reduce a risk of explosion of the battery cell. ϕ1/ϕ2 is limited to be greater than or equal to 0.35, so that time of the first insulating member in a high-temperature environment can also be shortened, weight loss of the first insulating member is reduced, a risk of an insulation failure is reduced, and reliability of the battery cell is improved. ϕ1/ϕ2 is limited to be less than or equal to 0.85, so that a range of the weak portion may be limited, impact of setting the weak portion on a strength of the second wall is reduced, a risk that the weak portion is cracked in a normal use process of the battery cell is reduced, and reliability of the battery cell is improved.

In some embodiments, a thickness of the first wall is greater than a thickness of the second wall. During thermal runaway of the battery cell, deformation of the first wall is relatively small compared with that of the second wall, to reduce a risk that the first insulating member is offset between the first wall and the electrode terminal and a risk that the first insulating member is cracked, improve an insulation effect, and improve reliability of the battery cell. During thermal runaway of the battery cell, compared with the first wall, the second wall is more likely to protrude outward and be deformed. In this way, a gas flow channel on an inner side of the second wall can be enlarged, thereby improving gas discharging efficiency.

In some embodiments, the first wall and the second wall are respectively located on the two sides of the electrode assembly. The housing further includes a side wall, the side wall surrounds the electrode assembly, and the side wall is connected to the first wall and the second wall. In this embodiment of the present application, the electrode terminal and the pressure relief mechanism are respectively disposed on two sides of the electrode assembly, so that deformation of the first wall can be reduced in a process of releasing high-temperature gas, a risk that the first insulating member is offset between the first wall and the electrode terminal and a risk that the first insulating member is cracked are reduced, an insulation effect is improved, and reliability of the battery cell is improved.

In some embodiments, the thickness of the first wall is greater than a thickness of the side wall. During thermal runaway of the battery cell, deformation of the first wall having a relatively large thickness is relatively small, to reduce a risk that the first insulating member is offset between the first wall and the electrode terminal and a risk that the first insulating member is cracked, improve an insulation effect, and improve reliability of the battery cell. During thermal runaway of the battery cell, a side wall having a relatively small thickness may protrude outward and may be deformed. In this way, a distance between the side wall and the electrode assembly may be increased, to facilitate gas discharge.

In some embodiments, the housing includes a shell and an end cap, the shell includes the first wall and the side wall that are integrally formed, the end cap is the second wall, and the end cap is sealingly connected to the side wall. The first wall and the side wall are integrally formed, and a connection strength between the first wall and the side wall is relatively high. During thermal runaway of the battery cell, the side wall may bind the first wall, to reduce deformation of the first wall and reduce a risk that the first insulating member is offset between the first wall and the electrode terminal and a risk that the first insulating member is cracked, improve an insulation effect, and improve reliability of the battery cell.

In some embodiments, a center of the electrode assembly is provided with a first through hole. Along an extension direction of the first through hole, the first through hole is provided between the electrode terminal and the pressure relief mechanism. During thermal runaway of the battery cell, gas between the electrode assembly and the first wall may flow to the pressure relief mechanism through the first through hole, to reduce a pressure exerted on the first wall and the electrode terminal, reduce deformation of the first wall, reduce a risk that the first insulating member is offset between the first wall and the electrode terminal and a risk that the first insulating member is cracked, and improve insulation reliability.

In some embodiments, the first tab is disposed at one end of the electrode assembly that faces the first wall, and the second tab is disposed at one end of the electrode assembly that faces the second wall. The battery cell further includes a first current collecting member and a second current collecting member, the first current collecting member is connected to the first tab and the electrode terminal, the second tab is connected to the second current collecting member, and at least one of the side wall and the second wall is connected to the second current collecting member, to enable the side wall to be electrically connected to the first wall and the second current collecting member. Before the battery cell undergoes thermal runaway and the pressure relief mechanism is actuated, the side wall or the second wall may bind the first wall and the electrode terminal through the second current collecting member, the electrode assembly, and the first current collecting member, to reduce deformation of the first wall in a process of increasing an internal pressure of the battery cell.

In some embodiments, the second current collecting member is connected to the second wall.

In some embodiments, the electrode terminal includes the terminal body and the first limiting portion, at least a part of the terminal body is accommodated in the electrode lead-out hole, the first limiting portion is connected to the terminal body, and at least a part of the first limiting portion protrudes from the outer peripheral surface of the terminal body. In the thickness direction of the first wall, the first limiting portion at least partially overlaps the first wall, and at least a part of the first insulating member is located between the first wall and the first limiting portion. During thermal runaway of the battery cell, the first insulating member may be kept between the first limiting portion and the first wall, to reduce a risk that the first limiting portion is in direct contact with the first wall, so as to suppress a current between the electrode terminal and the first wall, and reduce continuous heat generation of the electrode terminal and the first wall.

In some embodiments, the electrode terminal further includes the second limiting portion connected to the terminal body, at least a part of the second limiting portion protrudes from the outer peripheral surface of the terminal body, and in the thickness direction of the first wall, the first limiting portion and the second limiting portion are respectively located on the two sides of the first wall. The battery cell includes a sealing member, and in the thickness direction of the first wall, at least a part of the sealing member is disposed between the second limiting portion and the first wall. A thermal weight loss temperature of the sealing member is greater than or equal to 200°C. The sealing member is not prone to weight loss or has minimal weight loss during thermal runaway of the battery cell, so that the sealing member can be kept between the first wall and the electrode terminal, to reduce a risk that the electrode terminal is in direct contact with the first wall.

In some embodiments, the sealing member includes the thermosetting material. The sealing member including the thermosetting material can maintain relatively good stability at a high temperature, and can isolate the second limiting portion from the first wall during thermal runaway of the battery cell.

In some embodiments, a part of the sealing member and a part of the first insulating member are stacked in the thickness direction of the first wall, to separate the hole wall surface of the electrode lead-out hole from the terminal body. In this embodiment of the present application, a risk that the terminal body is in contact with the first wall can be reduced.

In some embodiments, the sealing member includes a first sealing portion and a second sealing portion that are connected, at least a part of the first sealing portion is located between the second limiting portion and the first wall, and at least a part of the second sealing portion is located in the electrode lead-out hole. The first insulating member includes the first insulating portion and the second insulating portion that are connected, at least a part of the first insulating portion is located between the first limiting portion and the first wall, at least a part of the second insulating portion is located in the electrode lead-out hole, and in a radial direction of the electrode lead-out hole, the second insulating portion at least partially overlaps the second sealing portion in the electrode lead-out hole. The second isolation portion and the second sealing portion may have an effect of double isolation in the radial direction of the electrode lead-out hole, to reduce, during thermal runaway of the battery cell, a risk that the electrode terminal is in contact with the first wall.

In some embodiments, the electrode assembly includes a positive electrode plate, the positive electrode plate includes a positive electrode current collector and a positive electrode film layer disposed on at least one side of the positive electrode current collector, the positive electrode film layer includes a positive electrode active material, and the positive electrode active material includes a layered transition metal oxide. The layered transition metal oxide includes at least one of a compound with a formula of LiₐNi_{b}Co_{c}M_{d}OₑA_{f} and a modified compound of the layered transition metal oxide, 0.8≤a≤1.2, 0.8≤b≤0.95, 0<c<1, 0<d<1, 1≤e≤2, and 0≤f≤1, M includes at least one of Mn, Al, Zr, Zn, Cu, Cr, Mg, Fe, V, Ti, and B, and A includes at least one of N, F, S, and Cl.

A battery cell having a relatively high content of Ni has advantages such as a high energy density, good low-temperature performance, and good charging and discharging performance. Thermal stability of the battery cell having the high content of Ni is relatively poor. During thermal runaway, the battery cell generates more heat and has a greater temperature increase. In this embodiment of the present application, the first insulating member having high-temperature resistance is disposed between the first wall and the electrode terminal. The first insulating member can bear a high temperature generated during thermal runaway of the battery cell having the high content of Ni, to suppress a current between the electrode terminal and the first wall, and reduce continuous heat generation of the electrode terminal and the first wall.

In some embodiments, the battery cell further includes an electrolyte solution accommodated in the housing. The electrolyte solution includes a linear ester solvent, and a mass percentage of the linear ester solvent in the electrolyte solution ranges from 25.5 wt% to 76.5 wt%.

In this embodiment of the present application, the mass percentage of the linear ester solvent is greater than or equal to 25.5 wt%, so that conductivity of the electrolyte solution is relatively high, which is conducive to improving a liquid-phase transport capability of active ions, and improving fast charging and discharging capabilities of the battery cell, thereby improving rate performance of the battery cell. The mass percentage of the linear ester solvent is greater than or equal to 25.5 wt%, so that viscosity of an electrolyte system is relatively low, and the electrolyte solution can more easily flow to wet the electrode assembly, thereby improving fast charging and discharging capabilities of a battery cell, and further improving rate performance of the battery cell.

During cyclic charging and discharging of the battery cell, the linear ester solvent may face a decomposition and gas evolution problem. In this embodiment of the present application, the mass percentage of the linear ester solvent is set to be less than or equal to 76.5 wt%, to limit an internal pressure of the battery cell, reduce deformation of the housing, reduce a risk of failure of the battery cell, and improve reliability.

In some embodiments, the mass percentage of the linear ester solvent in the electrolyte solution ranges from 42.5 wt% to 70 wt%, so that rate performance and use reliability of the battery cell can be further taken into consideration, and cycle performance of the battery cell can be improved.

In some embodiments, thermal conductivity of the first insulating member is less than thermal conductivity of the first wall, and the thermal conductivity of the first insulating member is less than thermal conductivity of the electrode terminal. Compared with the first wall and the electrode terminal, the first insulating member has a relatively small thermal conductivity. The first insulating member may relieve heat conduction during thermal runaway of the battery cell, reduce weight loss of the first insulating member, and reduce a risk of an insulation failure.

In some embodiments, the thermal conductivity of the first wall is less than the thermal conductivity of the electrode terminal. During thermal runaway of the battery cell, a heated area of the first wall is relatively large, and the first wall is prone to heating up under heating. The first wall has a relatively small thermal conductivity. In this way, heat conducted from the first wall to the first insulating member can be reduced, to reduce thermal weight loss of the first insulating member and reduce a risk of an insulation failure.

In some embodiments, the battery cell is a cylindrical battery cell, and a diameter of the cylindrical battery cell is greater than or equal to 35 mm and less than or equal to 70 mm. Setting the diameter of the cylindrical battery cell to be greater than or equal to 35 mm can improve a capacity and an energy density of the cylindrical battery cell. The diameter of the cylindrical battery cell is related to heat generation during thermal runaway of the cylindrical battery cell. The diameter of the cylindrical battery cell is set to be less than or equal to 70 mm, to limit a maximum temperature of the cylindrical battery cell during thermal runaway, and reduce a risk of failure of the first insulating member.

According to a second aspect, an embodiment of the present application provides a battery device, including a plurality of battery cells provided by any embodiment in the first aspect.

In some embodiments, at least two of the battery cells are connected in parallel.

According to a third aspect, an embodiment of the present application provides an electric device. The electric device includes the battery device provided by any embodiment in the second aspect, and the battery device is configured to provide electric energy.

### BRIEF DESCRIPTION OF THE DRAWINGS

To describe the technical solutions in embodiments of the present application more clearly, the following briefly describes the accompanying drawings required in the embodiments of the present application. Apparently, the accompanying drawings in the following descriptions show merely some embodiments of the present application, and a person of ordinary skill in the art may derive other drawings from these accompanying drawings without creative efforts.
FIG. 1 is a schematic diagram of a structure of a vehicle according to some embodiments of the present application;
FIG. 2 is a schematic diagram of a battery device according to some embodiments of the present application;
FIG. 3 is a schematic diagram of a structure of a battery module shown in FIG. 2;
FIG. 4 is a schematic diagram of a structure of a battery cell according to some embodiments of the present application;
FIG. 5 is a schematic exploded view of the battery cell shown in FIG. 4;
FIG. 6 is a cross-sectional view of an electrode assembly of a battery cell according to some embodiments of the present application;
FIG. 7 is a schematic diagram of a positive electrode plate, when unfolded, of an electrode assembly of a battery cell according to some embodiments of the present application;
FIG. 8 is a schematic diagram of a negative electrode plate, when unfolded, of an electrode assembly of a battery cell according to some embodiments of the present application;
FIG. 9 is a cross-sectional view of a battery cell according to some embodiments of the present application;
FIG. 10 is an enlarged schematic diagram of a block A in FIG. 9;
FIG. 11 is an enlarged schematic diagram of a round frame in FIG. 10;
FIG. 12 is an enlarged schematic diagram of a round frame in FIG. 11;
FIG. 13 is an enlarged schematic diagram of a block B in FIG. 9;
FIG. 14 is an enlarged schematic diagram of a round frame in FIG. 13;
FIG. 15 is a partial cross-sectional view of a battery cell according to some embodiments of the present application;
FIG. 16 is an enlarged schematic diagram of a block in FIG. 15;
FIG. 17 is a partial cross-sectional view of a battery cell according to some embodiments of the present application;
FIG. 18 is an enlarged schematic diagram of a block in FIG. 17;
FIG. 19 is an enlarged schematic diagram of a block in FIG. 18;
FIG. 20 is a partial cross-sectional view of a battery cell according to some other embodiments of the present application;
FIG. 21 is an enlarged schematic diagram of a block in FIG. 20;
FIG. 22 is a partial cross-sectional view of a battery cell according to some other embodiments of the present application;
FIG. 23 is a partial cross-sectional view of a battery cell according to some other embodiments of the present application;
FIG. 24 is an enlarged schematic diagram of a block in FIG. 23;
FIG. 25 is a partial cross-sectional view of a battery cell according to some other embodiments of the present application;
FIG. 26 is an enlarged schematic diagram of a block in FIG. 25;
FIG. 27 is a partial cross-sectional view of a battery cell according to some other embodiments of the present application;
FIG. 28 is a schematic diagram of a first insulating member and a bonding layer that are of a battery cell according to some embodiments of the present application;
FIG. 29 is a schematic exploded view of a battery cell according to some other embodiments of the present application;
FIG. 30 is a partial cross-sectional view of a battery cell according to some other embodiments of the present application; and
FIG. 31 is a simplified schematic diagram of a battery device according to some other embodiments of the present application.

### Description of reference numerals:

1. Vehicle; 2. battery device; 3. controller; 4. motor; 5. box; 5a. first box; 5b. second box; 6. battery module; 7. battery cell; 7a. battery unit; 8. bus component;
10. electrode assembly; 10a. first tab; 10b. second tab; 10c. electrode body; 10d. first through hole; 11. positive electrode plate; 111. positive electrode current collector; 1111. positive tab; 112. positive electrode film layer; 12. negative electrode plate; 121. negative electrode current collector; 1211. negative tab; 122. negative electrode film layer; 13. isolation member;
20. housing; 20a. second wall; 20b. accommodating cavity; 21. shell; 211. first wall; 2111. electrode lead-out hole; 2112. outer surface; 2113. inner surface; 2114. first concave portion; 212. side wall; 2121. convex portion; 2122. second concave portion; 2123. crimping portion; 22. end cap; 221. third concave portion;
30. electrode terminal; 31. terminal body; 311. second through hole; 32. first limiting portion; 33. second limiting portion; 331. sixth concave portion; 34. terminal concave portion;
40. first insulating member; 41. first insulating portion; 42. second insulating portion; 43. third insulating portion;
50. pressure relief mechanism; 51. pressure relief portion; 52. weak portion; 60. sealing member; 61. first sealing portion; 62. second sealing portion;
70. second insulating member; 71. fourth insulating portion; 72. fifth insulating portion; 73. fourth concave portion;
80. third insulating member; 80a. fifth concave portion; 81. first current collecting member; 82. cover plate; 83. sealing nail; 84. second current collecting member; 85. fourth insulating member; 86. bonding layer; 87. fifth insulating member; 90. electrode lead-out portion;
V. winding direction; and Z. thickness direction.

### DETAILED DESCRIPTION

To make the objectives, technical solutions, and advantages of embodiments of the present application clearer, the following clearly describes the technical solutions in embodiments of the present application with reference to the accompanying drawings in the embodiments of the present application. Apparently, the described embodiments are merely some rather than all of the embodiments of the present application. All other embodiments obtained by a person of ordinary skill in the art based on embodiments of the present application without making creative efforts shall fall within the protection scope of the present application.

Unless otherwise defined, meanings of all technical and scientific terms used in the present application are the same as those commonly understood by a person skilled in the art to which the present application belongs; and the terms used in the descriptions of the present application are merely for the purpose of describing specific embodiments, but are not intended to limit the present application. The terms "comprise" and "have" and any variations thereof in the specification and the claims of the present application as well as the descriptions of the accompanying drawings are intended to cover non-exclusive inclusion. The terms "first", "second", and the like in the specification and claims of the present application or the foregoing accompanying drawings are used to distinguish different objects, rather than to describe a specific order or primary-secondary relationship.

"Embodiment" mentioned in the present application means that specific features, structures, or characteristics described with reference to the embodiment may be included in at least one embodiment of the present application. The term appearing at different positions of this specification may not refer to the same embodiment or an independent or alternative embodiment that is mutually exclusive with another embodiment.

In the descriptions of the present application, it should be noted that, unless otherwise expressly specified and limited, the terms "mount", "connect", "connection" and "attachment" should be understood in a broad sense. For example, the connection may be a fixed connection, a detachable connection, or an integral connection; or the connection may be a direct connection, an indirect connection through an intermediate medium, or internal communication between two elements. A person of ordinary skill in the art may understand the specific meanings of the foregoing terms in the present application according to specific situations.

The term "and/or" in the present application only describes an association relationship for describing associated objects and represents that three relationships may exist. For example, A and/or B may represent the following three cases: Only A exists, both A and B exist, and only B exists. In addition, the character "/" in the present application generally indicates an "or" relationship between the associated objects.

In the embodiments of the present application, the same reference numerals denote the same components, and for the sake of brevity, the detailed description of the same components is omitted in different embodiments. It should be understood that the dimensions, such as thickness, length and width, of the various components in the embodiments of the present application illustrated in the accompanying drawings, as well as the dimensions, such as an overall thickness, length and width, of an integrated apparatus are merely illustrative and should not be construed to limit the present application in any way.

In the present application, "a plurality of" means two or more (including two).

Nowadays, from the perspective of development of the market situation, batteries are applied increasingly. Batteries are not only used in energy storage power systems such as hydro, thermal, wind, and solar power stations, but also are widely used in electric means of transport such as electric bicycles, electric motorcycles, and electric vehicles, and are used in many other fields such as aerospace. The market demand for batteries keeps soaring with the continuous increase of the application fields of the batteries.

A battery device generally refers to a single physical module including a plurality of battery cells to provide a higher voltage and capacity. A battery cell may be a smallest unit forming a battery device.

The battery cell generally includes a housing, an electrode assembly accommodated in the housing, and a positive electrode lead-out portion and a negative electrode lead-out portion that are disposed in the housing. The electrode assembly generally includes a positive electrode plate and a negative electrode plate. The positive electrode lead-out portion is electrically connected to the positive electrode plate, and the negative electrode lead-out portion is electrically connected to the negative electrode plate. The positive electrode lead-out portion and the negative electrode lead-out portion are configured to be electrically connected to an external circuit, to implement charging or discharging of the battery cell.

In some embodiments, the battery cell includes an electrode terminal. One of the positive electrode lead-out portion and the negative electrode lead-out portion includes the electrode terminal, and the other of the positive electrode lead-out portion and the negative electrode lead-out portion includes a housing wall of the housing.

When a battery cell in the battery device undergoes thermal runaway due to an accident (for example, an internal short circuit), the battery cell may maintain a high-temperature state in a period of time. In the high-temperature state, an insulating member configured to insulate and isolate the electrode terminal from the housing may fail. Consequently, a current from another battery cell or a current from an external power supply is continuously transmitted between the electrode terminal and the housing, causing the battery cell to partially and continuously generate heat. Consequently, a risk of an abnormal temperature increase and thermal runaway of another normal battery cell is caused, leading to heat spread.

For example, when a conduction path between the electrode terminal of the battery cell and the housing is formed, a closed loop is formed between the battery cell and a battery cell connected in parallel with the battery cell, and a current continuously flows through the battery cell, causing the battery cell to partially and continuously generate heat.

In view of this, an embodiment of the present application provides a battery cell. An insulating member having a relatively high thermal weight loss temperature is disposed between an electrode terminal and a housing, to reduce, during thermal runaway of the battery cell, a risk of conduction between the electrode terminal and the housing, reduce continuous heat generation of the battery cell that undergoes thermal runaway, reduce a risk that another battery cell undergoes thermal runaway, and improve reliability.

The battery cell described in the embodiments of the present application is applicable to a battery device and an electric device using the battery device. The electric device may include a device using a battery device as a power supply or various energy storage systems using battery devices as energy storage elements. The electric device may include but is not limited to a mobile phone, a tablet, a notebook computer, an electric toy, an electric tool, an electric scooter, an electric vehicle, a ship, a spacecraft, or the like. The electric toy may include a fixed or mobile electric toy, such as a game console, an electric vehicle toy, an electric ship toy, or an electric airplane toy. The spacecraft may include an airplane, a rocket, a space shuttle, a spaceship, or the like.

For ease of description, in the following embodiments, descriptions are provided by using an example in which an electric device is a vehicle.

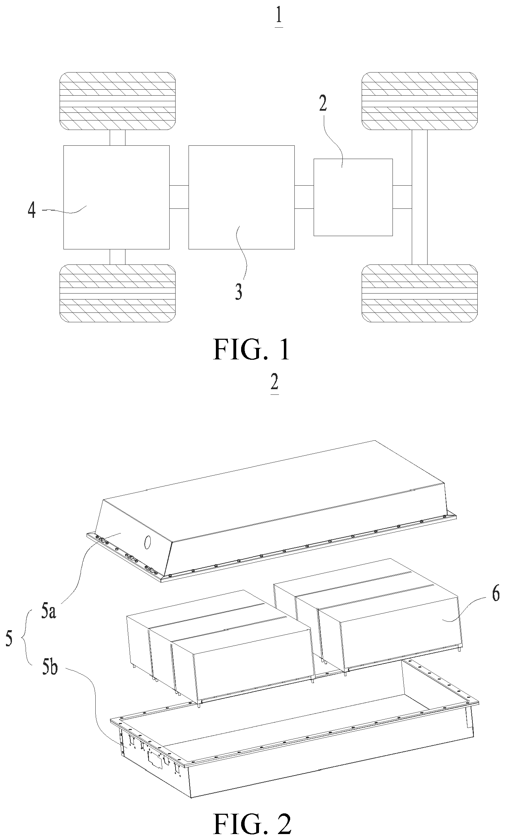

FIG. 1 is a schematic diagram of a structure of a vehicle according to some embodiments of the present application.

As shown in FIG. 1, a battery device 2 is disposed inside the vehicle 1, and the battery device 2 may be disposed at a bottom, head, or tail of the vehicle 1. The battery device 2 may be used for supplying power to the vehicle 1. For example, the battery device 2 may be used as an operating power supply for the vehicle 1.

The vehicle 1 may further include a controller 3 and a motor 4, where the controller 3 is used for controlling the battery device 2 to supply power to the motor 4, for example, operating electricity requirements during start-up, navigation and running of the vehicle 1.

In some embodiments of the present application, the battery device 2 not only may be used as the operating power supply of the vehicle 1, but also may be used as a driving power supply of the vehicle 1, to replace or partially replace fuel or natural gas to provide driving power for the vehicle 1.

FIG. 2 is a schematic diagram of a battery device according to some embodiments of the present application.

In some embodiments, a battery device 2 may include one or more battery cell assemblies, configured to provide a voltage and a capacity.

The battery cell assembly may include a plurality of battery cells (not shown in FIG. 2), and the plurality of battery cells are connected in series, in parallel, or in series-parallel through a bus component. Series-parallel connection means that the plurality of battery cells are in both series connection and parallel connection.

The battery cell may be a secondary battery cell, where the secondary battery cell is a battery cell whose active material may be activated for continuous use through charging after the battery cell is discharged.

For example, the battery cell may be a lithium-ion battery cell, a sodium-ion battery cell, a sodium-lithium-ion battery cell, a lithium metal battery cell, a sodium metal battery cell, a lithium-sulfur battery cell, a magnesium-ion battery cell, a nickel-hydrogen battery cell, a nickel-cadmium battery cell, or a lead storage battery cell.

For example, the battery cell may be a prismatic battery cell, a soft pack battery cell, or a battery cell in another shape. The prismatic battery cell includes a square-housing battery cell, a blade-shaped battery cell, or a polygon prismatic battery cell. The polygon prismatic battery cell is, for example, a hexagonal prismatic battery cell.

In some embodiments, the battery cell assembly is generally formed by arranging a plurality of battery cells. For example, the battery cell assembly may be a battery module 6, and the battery module 6 is formed by arranging and fixing a plurality of battery cells to form an independent module. For example, the battery module 6 may be formed by binding the plurality of battery cells through a cable tie.

In some embodiments, the battery device 2 may be a battery pack. The battery pack includes a box 5 and one or more battery cell assemblies accommodated in the box 5. For example, the battery cell assembly may be a battery module 6, and the battery cell assembly may be accommodated in the box in a manner of fixing the battery module 6 in the box. For example, the battery cell assembly may alternatively be accommodated in the box in a manner of directly fixing a plurality of battery cells in the box.

In some embodiments, the box 5 is configured to accommodate battery cells, and the box 5 may have a plurality of structures.

In some embodiments, the box 5 may include a first box 5a and a second box 5b. The first box 5a and the second box 5b snap together, so that closed space is formed in the box 5, to accommodate the battery cell assembly. The term "closed" here refers to covering or closing in a sealed or unsealed manner. The first box may be a top cap or a bottom plate.

In some embodiments, the box 5 may include a top cap, a frame, and a bottom plate. The top cap and the bottom plate are separately connected to the frame, so that closed space is formed inside the box, to accommodate the battery cell assembly. For example, the frame may include a plurality of side beams.

In some embodiments, the box 5 may be used as a part of a chassis structure of a vehicle. For example, a part of the box 5 may become at least a part of the chassis of the vehicle, or a part of the box 5 may become at least a part of a cross beam and a longitudinal beam of the vehicle.

In some embodiments, the battery device 2 may be an energy storage device.

The energy storage device may be used in an energy storage power station, a wind power generation system, a solar power generation system, a mobile power system, a temporary power supply system, or the like. The energy storage device may store electric energy as needed and output electric energy in a proper occasion. For example, the energy storage device may store electric energy in an off-peak electricity consumption period, and provide electric energy for a related user or an electric device in a peak electricity consumption period.

In some embodiments, the energy storage device includes an energy storage container, an energy storage electric cabinet, or the like.

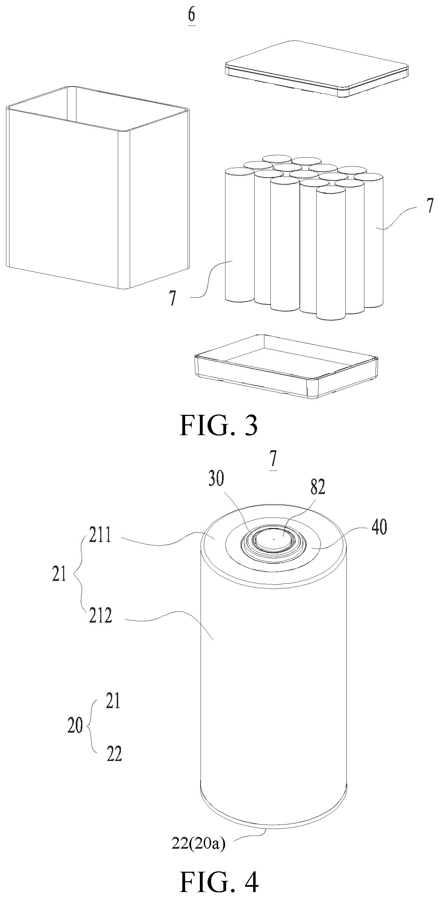

FIG. 3 is a schematic diagram of a structure of a battery module shown in FIG. 2.

In some embodiments, as shown in FIG. 3, there are a plurality of battery cells 7, and the plurality of battery cells 7 are first connected in series, in parallel, or in series-parallel to form a battery module 6. A plurality of battery modules 6 are then connected in series, in parallel, or in series-parallel to form a whole and are accommodated in the box.

The plurality of battery cells 7 in the battery module 6 may be electrically connected through a bus component, to implement series connection, parallel connection, or series-parallel connection among the plurality of battery cells 7 in the battery module 6. There may be one or more bus components, and each bus component is configured to electrically connect at least two battery cells 7.

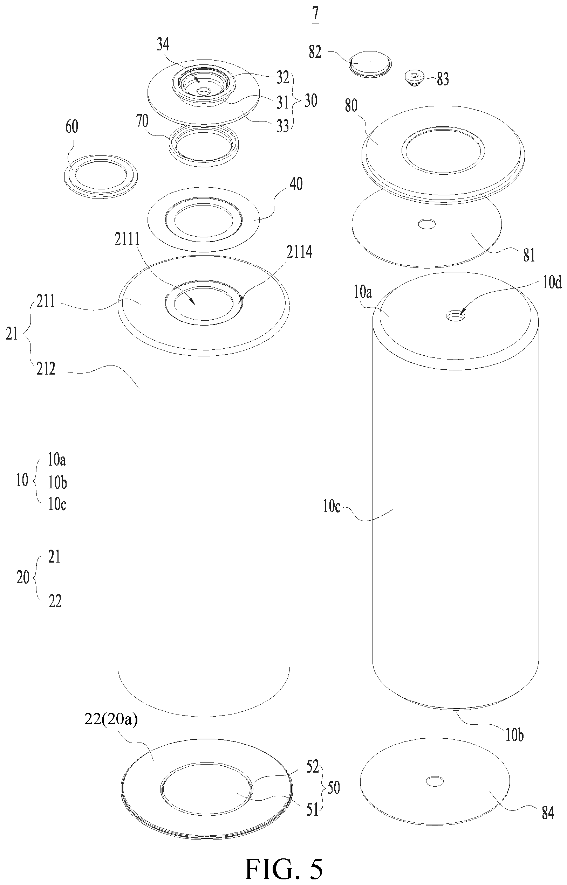

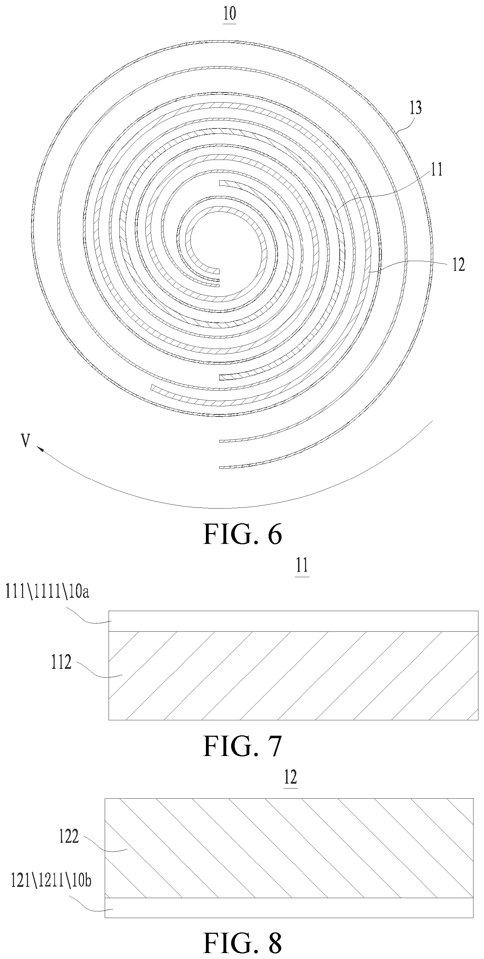

FIG. 4 is a schematic diagram of a structure of a battery cell according to some embodiments of the present application; FIG. 5 is a schematic exploded view of the battery cell shown in FIG. 4; FIG. 6 is a cross-sectional view of an electrode assembly of a battery cell according to some embodiments of the present application; FIG. 7 is a schematic diagram of a positive electrode plate, when unfolded, of an electrode assembly of a battery cell according to some embodiments of the present application; and FIG. 8 is a schematic diagram of a negative electrode plate, when unfolded, of an electrode assembly of a battery cell according to some embodiments of the present application.

Referring to FIG. 4 to FIG. 8, an embodiment of the present application provides a battery cell 7, including a housing 20 and an electrode assembly 10 accommodated in the housing 20.

In some embodiments, the housing 20 may be a steel housing, an aluminum housing, a composite metal housing (such as a copper-aluminum composite housing), or the like.

The housing 20 has a hollow structure, and an accommodating cavity 20b configured to accommodate the electrode assembly 10 and an electrolyte is formed inside the housing 20.

In some embodiments, the housing 20 of the battery cell 7 is a cylindrical housing, a square housing, a prismatic housing, or a housing in another shape.

In some embodiments, the housing 20 includes a shell 21 and an end cap 22, the shell 21 has an opening, and the end cap 22 is connected to the shell 21 and is configured to cover the opening.

The shell 21 is a component configured to form an internal cavity of the battery cell 7 together with the end cap 22, where the formed internal cavity may be configured to accommodate the electrode assembly 10, an electrolyte, and other components.

The shell 21 and the end cap 22 may be independent components. For example, the opening may be provided on the shell 21, and the end cap 22 is configured to cover the opening at the opening, to form the internal cavity of the battery cell 7.

The shell 21 may have a plurality of shapes and sizes, such as a cuboid shape or a cylindrical shape. Specifically, a shape of the shell 21 may be determined according to a specific shape and size of the electrode assembly 10. The shell 21 may be made of a plurality of materials, for example, copper, iron, aluminum, stainless steel, and an aluminum alloy.

A shape of the end cap 22 may match the shape of the shell 21 to fit the shell 21. A material of the end cap 22 may be the same as or different from a material of the shell 21. Optionally, the end cap 22 may be made of a material with specific hardness and a specific strength (for example, copper, iron, aluminum, stainless steel, and an aluminum alloy), so that the end cap 22 is less likely to be deformed under extrusion and collision, enabling the battery cell 7 to have a higher structural strength and enhanced reliability.

The end cap 22 is connected to the shell 21 through welding, bonding, clamping, or in another manner.

The shell 21 may be open at one end, or may be open at two ends. In some examples, the shell 21 may be a structure being open on one side, and one end cap 22 is disposed and is configured to cover the shell 21. In some other examples, the shell 21 may alternatively be a structure being open on two sides, two end caps 22 are disposed, and the two end caps 22 are respectively configured to cover two openings of the shell 21.

The electrode assembly 10 is a component in the battery cell 7 that undergoes electrochemical reactions. The shell 21 may include one or more electrode assemblies 10.

In some embodiments, the electrode assembly 10 includes a positive electrode plate 11, a negative electrode plate 12, and an isolation member 13. The positive electrode plate 11 and the negative electrode plate 12 have opposite polarities, and the isolation member 13 separates the positive electrode plate 11 from the negative electrode plate 12.

At least a part of the isolation member 13 is located between the positive electrode plate 11 and the negative electrode plate 12. During charging and discharging of the battery cell 7, active ions (for example, lithium ions) are intercalated and deintercalated back and forth between the positive electrode plate 11 and the negative electrode plate 12. The isolation member 13 is disposed between the positive electrode plate 11 and the negative electrode plate 12, and may prevent a short circuit between the positive electrode and the negative electrode and may allow the active ions to pass through.

In some embodiments, the positive electrode plate 11 may include a positive electrode current collector 111 and a positive electrode film layer 112 disposed on at least one surface of the positive electrode current collector 111.

For example, the positive electrode current collector 111 has two opposite surfaces in a thickness direction of the positive electrode current collector 111, and the positive electrode film layer 112 is disposed on either or both of the two opposite surfaces of the positive electrode current collector 111.

For example, the positive electrode current collector 111 may be made of a metal foil, a conductive polymer material, a carbon material, or a composite current collector. For example, the metal foil may be made of pure metal, alloy, or surface-treated metal, including but not limited to stainless steel, copper, aluminum, nickel, a nickel alloy, titanium, or silver. The composite current collector may include a polymer material substrate layer and a metal layer. The composite current collector may be formed by forming a metal material (aluminum, an aluminum alloy, nickel, a nickel alloy, titanium, a titanium alloy, silver, a silver alloy, or the like) on a polymer material substrate (for example, a substrate of polypropylene, polyethylene terephthalate, polybutylene terephthalate, polystyrene, or polyethylene).

For example, the positive electrode film layer 112 includes a positive electrode active material, and the positive electrode active material may include at least one of the following materials: a lithium-containing phosphate, a lithium transition metal oxide, and respective modified compounds thereof. However, the present application is not limited to these materials, and other conventional materials that are used as positive electrode active materials for batteries can also be used. These positive electrode active materials may be used alone or in combination of two or more. Examples of the lithium-containing phosphate may include, but are not limited to, at least one of lithium iron phosphate (such as LiFePO₄ (also abbreviated as LFP)), a composite material of the lithium iron phosphate and carbon, lithium manganese phosphate (such as LiMnPO₄), a composite material of the lithium manganese phosphate and the carbon, lithium manganese iron phosphate, and a composite material of the lithium manganese iron phosphate and the carbon. Examples of lithium transition metal oxides may include, but are not limited to, at least one of a lithium-cobalt oxide (such as LiCoO₂), a lithium-nickel oxide (such as LiNiO₂), a lithium-manganese oxide (such as LiMnO₂ or LiMn₂O₄), a lithium-nickel-cobalt oxide, a lithium-manganese-cobalt oxide, a lithium-nickel-manganese oxide, a lithium-nickel-cobalt-manganese oxide (such as LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁)), a lithium-nickel-cobalt-aluminum oxide (such as LiNi_{0.8}Co_{0.15}Al_{0.05}O₂), and a modified compound thereof. The modified compound refers to a material obtained based on the foregoing materials through a modification means such as doping or coating.

In some embodiments, the negative electrode plate 12 may include a negative electrode current collector 121.

For example, the negative electrode current collector 121 may be made of a metal foil, a conductive polymer material, a carbon material, or a composite current collector. For example, the metal foil may be made of pure metal, alloy, or surface-treated metal, including but not limited to stainless steel, copper, aluminum, nickel, a nickel alloy, titanium, or silver. The composite current collector may include a polymer material substrate layer and a metal layer. The composite current collector may be formed by forming a metal material (aluminum, an aluminum alloy, nickel, a nickel alloy, titanium, a titanium alloy, silver, a silver alloy, or the like) on a polymer material substrate (for example, a substrate of polypropylene, polyethylene terephthalate, polybutylene terephthalate, polystyrene, or polyethylene).

For example, the negative electrode plate 12 may include a negative electrode current collector 121 and a negative electrode film layer 122 disposed on at least one surface of the negative electrode current collector 121.

For example, the negative electrode current collector 121 has two opposite surfaces in a thickness direction of the negative electrode current collector 121, and the negative electrode film layer 122 is disposed on either or both of the two opposite surfaces of the negative electrode current collector 121.

For example, the negative electrode film layer 122 includes a negative electrode active material, and the negative electrode active material may be well known in the art for battery cells. For example, the negative electrode active material may include at least one of the following materials: artificial graphite, natural graphite, soft carbon, hard carbon, a silicon-based material, a tin-based material, lithium titanate, or the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials that are used as negative electrode active materials for battery cells may be further used. One type of these negative electrode active materials may be used individually, or two or more types of these negative electrode active materials may be used in combination.

In some embodiments, a material of the positive electrode current collector 111 may be aluminum, and a material of the negative electrode current collector 121 may be copper.

In some implementations, the isolation member 13 includes a separator. The separator in the present application may be any well-known separator with a porous structure having good chemical stability and mechanical stability.

For example, a main material of the separator may be selected from at least one of glass fiber, non-woven fabric, polyethylene, polypropylene, polyvinylidene fluoride, or ceramic. The separator may be a single-layer film or a multi-layer composite film, which is not particularly limited. When the separator is a multi-layer film, materials of each layer may be the same or different.

A surface of the separator may be further coated with an inorganic particle coating layer, an organic particle coating layer, or an organic/organic composite coating layer.

The isolation member 13 may be an independent component located between the positive electrode plate 11 and the negative electrode plate 12, or may be attached to a surface of the positive electrode plate 11 or a surface of the negative electrode plate 12.

In some embodiments, the isolation member 13 is a solid-state electrolyte. The solid-state electrolyte is disposed between the positive electrode plate 11 and the negative electrode plate 12, and also serves to transmit ions and isolate the positive electrode from the negative electrode.

In some embodiments, the battery cell 7 further includes an electrolyte, and the electrolyte serves to conduct ions between the positive electrode plate 11 and the negative electrode plate 12. The electrolyte in the present application may be selected as needed. The electrolyte may be in a liquid state, in a gelled state, or in a solid state.

In some embodiments, the liquid-state electrolyte includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalate)borate, lithium difluoro bis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone. The solvent is optionally an ether solvent. The ether solvent may include one or more of ethylene glycol dimethyl ether, ethylene glycol diethyl ether, diethylene glycol dimethyl ether, triethylene glycol dimethyl ether, 1,3-dioxolane, tetrahydrofuran, methyltetrahydrofuran, diphenyl ether, or a crowned ether.

In some embodiments, the electrolytic solution further optionally includes an additive. For example, the additives may include negative electrode film-forming additives, positive electrode film-forming additives, and additives that can improve some performance of the battery cell, such as additives that improve overcharging/fast charging performance of the battery cell, additives that improve high-temperature performance of the battery cell, and additives that improve low-temperature performance of the battery cell.

In some embodiments, the gel-state electrolyte includes a polymer used as a skeleton network, and can be used in combination with an ionic liquid-lithium salt.

In some embodiments, the solid-state electrolyte includes a polymer solid-state electrolyte, an inorganic solid-state electrolyte, and a composite solid-state electrolyte.

For example, polymers of the polymer solid-state electrolyte may include polyether (polyoxyethylene), polysiloxane, polycarbonate, polyacrylonitrile, polyvinylidene fluoride, polymethylmethacrylate, single-ionic polymer, polyionic liquid, or cellulose.

For example, the organic solid-state electrolyte may be one or more of an oxide solid electrolyte (crystalline perovskite, a sodium superconducting ion conductor, garnet, or an amorphous LiPON thin film), a sulfide solid electrolyte (crystalline lithium superconducting ion conductor (lithium germanium phosphorus sulfide, and argyrodite) an amorphous sulfide), a halide solid electrolyte, a nitride solid electrolyte, and a hydride solid electrolyte.

For example, the composite solid-state electrolyte is formed by filling the inorganic solid-state electrolyte into the polymer solid-state electrolyte.

In some embodiments, the electrode assembly 10 may have a winding structure, or may have a laminated structure, or may have a hybrid structure of a winding structure and a laminated structure.

In some implementations, the electrode assembly 10 has a winding structure. The positive electrode plate 11 and the negative electrode plate 12 are wound into winding structures.

In some implementations, the electrode assembly 10 has a laminated structure.

For example, a plurality of positive electrode plates 11 and a plurality of negative electrode plates 12 may be disposed respectively, and the plurality of positive electrode plates 11 and the plurality of negative electrode plates 12 are alternately stacked. For example, a plurality of positive electrode plates 11 may be disposed, the negative electrode plate 12 is folded to form a plurality of folding segments that are stacked, and one positive electrode plate 11 is clamped between adjacent folding segments.

For example, the positive electrode plate 11 and the negative electrode plate 12 are both folded to form a plurality of folding segments that are stacked.

For example, a plurality of isolation members 13 may be disposed, which are respectively disposed between any adjacent positive electrode plates 11 or negative electrode plates 12.

For example, the isolation members 13 may be continuously disposed, and are disposed between any adjacent positive electrode plates 11 or negative electrode plates 12 in a folding or winding manner.

In some implementations, the electrode assembly 10 may be in a cylinder shape, a flat shape, or a polygon prism shape.

In some embodiments, the positive current collector 111 may include a positive tab 1111, and the negative current collector 121 may include a negative tab 1211. The positive tab 1111 and the negative tab 1211 may be configured to transmit a current. For example, at least a part of the positive tab 1111 is not coated with the positive electrode film layer 112, and at least a part of the negative tab 1211 is not coated with the negative electrode film layer 122.

In some embodiments, the electrode assembly 10 has a winding structure. The positive tab 1111 is wound to turns along a winding direction V. Optionally, an end portion of the positive tab 1111 is bent through a smoothing or flattening process, and a multi-layer structure stacked in an axial direction of the electrode assembly 10 is formed. Optionally, the positive tab 1111 is annular.

In some embodiments, the negative tab 1211 is wound to turns along a winding direction V. Optionally, an end portion of the negative tab 1211 is bent through a smoothing or flattening process, and a multi-layer structure stacked in an axial direction of the electrode assembly 10 is formed. The negative tab 1211 is annular.

In some embodiments, the electrode assembly 10 includes an electrode body 10c. For example, the electrode body 10c includes a positive electrode film layer 112, a part that is of the positive electrode current collector 111 and that is covered by the positive electrode film layer 112, a negative electrode film layer 122, a part that is of the negative electrode current collector 121 and that is covered by the negative electrode film layer 122, and an isolation member 13.

The positive tab 1111 and the negative tab 1211 may be led out from a same end of the electrode body 10c, or may be respectively led out from two opposite ends of the electrode body 10c. At least a part of the positive tab 1111 protrudes to an outer side of the isolation member 13, and at least a part of the negative tab 1211 protrudes to the outer side of the isolation member 13.

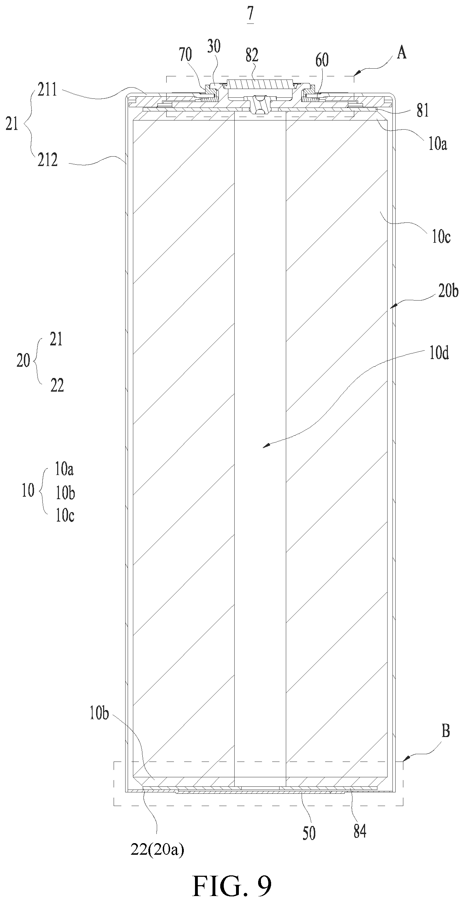

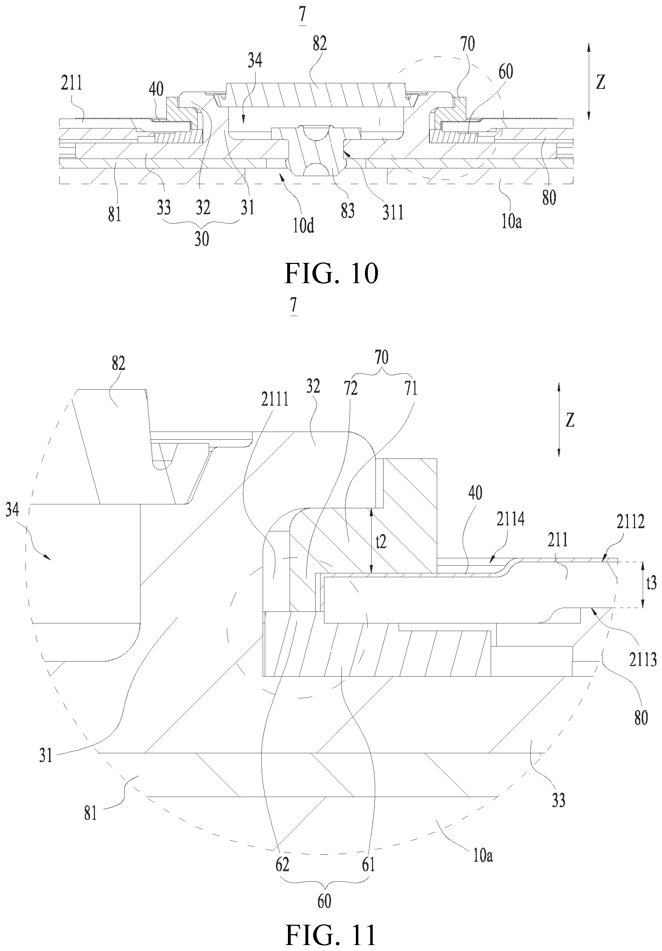

FIG. 9 is a cross-sectional view of a battery cell according to some embodiments of the present application; FIG. 10 is an enlarged schematic diagram of a block A in FIG. 9;

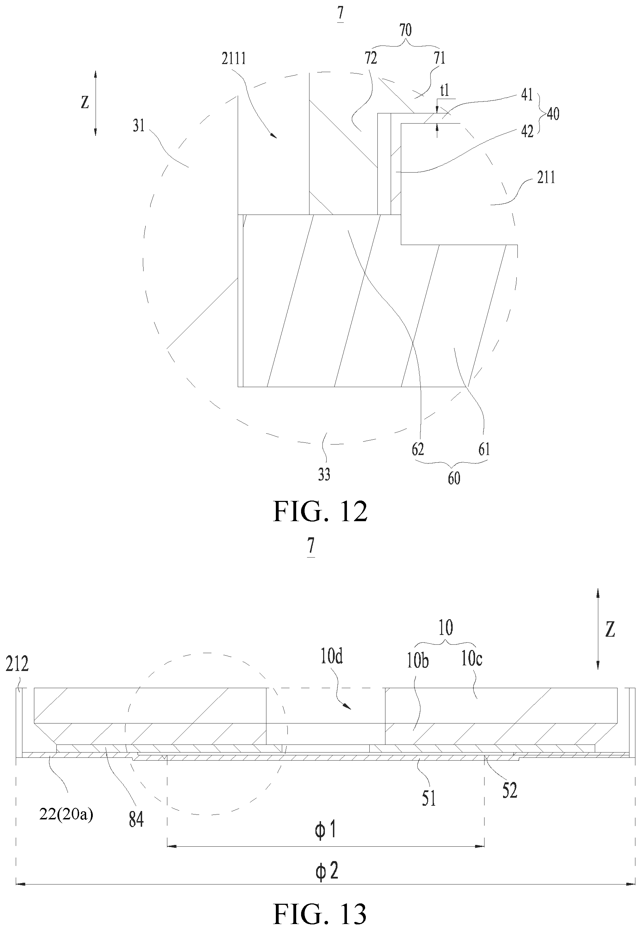

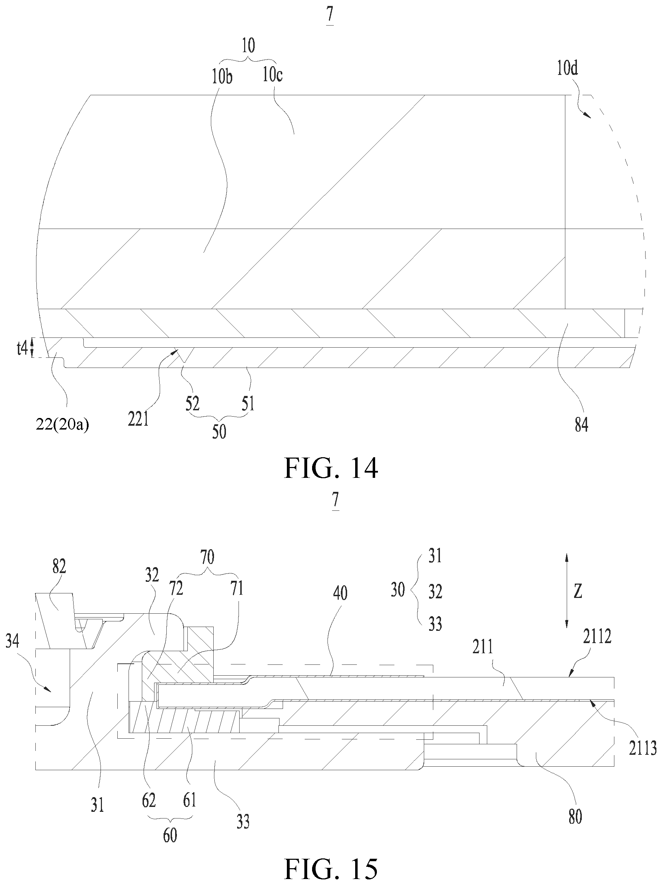

FIG. 11 is an enlarged schematic diagram of a round frame in FIG. 10; FIG. 12 is an enlarged schematic diagram of a round frame in FIG. 11; FIG. 13 is an enlarged schematic diagram of a block B in FIG. 9; and FIG. 14 is an enlarged schematic diagram of a round frame in FIG. 13.

Referring to FIG. 4 to FIG. 14, an embodiment of the present application provides a battery cell 7, including a housing 20, an electrode terminal 30, an electrode assembly 10, and a first insulating member 40. The housing 20 includes an accommodating cavity 20b, and the electrode assembly 10 is accommodated in the accommodating cavity 20b. The housing 20 includes a first wall 211, and the first wall 211 is provided with an electrode lead-out hole 2111 in communication with the accommodating cavity 20b. The electrode terminal 30 is disposed in the electrode lead-out hole 2111. The electrode assembly 10 includes a first tab 10a and a second tab 10b that have opposite polarities, the first tab 10a is electrically connected to the electrode terminal 30, and the second tab 10b is electrically connected to the first wall 211. At least a part of the first insulating member 40 is fixed between the electrode terminal 30 and the first wall 211, to insulate and isolate at least a part of the electrode terminal 30 from the first wall 211. A thermal weight loss temperature of the first insulating member 40 is greater than or equal to 300°C.

For example, the first wall 211 may be an end cap 22, or may be a wall of a shell 21.

One of the first tab 10a and the second tab 10b is a positive tab 1111, and the other of the first tab 10a and the second tab 10b is a negative tab 1211. A polarity of the electrode terminal 30 corresponds to the polarity of the first tab 10a. In some examples, the first tab 10a is the positive tab 1111, and the electrode terminal 30 is a positive electrode terminal. In some other examples, the first tab 10a is the negative tab 1211, and the electrode terminal 30 is a negative electrode terminal.

For example, the first tab 10a and the second tab 10b may be disposed at a same end of the electrode assembly 10, or may be respectively disposed at two opposite ends of the electrode assembly 10.

The first tab 10a may be directly connected to the electrode terminal 30, or may be indirectly connected to the electrode terminal 30 through another conductive structure.

The second tab 10b may be directly connected to the first wall 211, or may be indirectly connected to the first wall 211 through another conductive structure.

The electrode lead-out hole 2111 runs through the first wall 211. For example, along a thickness direction Z of the first wall 211, the electrode lead-out hole 2111 runs through the first wall 211, and a projection of the electrode terminal 30 at least partially overlaps a projection of the electrode lead-out hole 2111.

For example, the electrode lead-out hole 2111 is a circular hole, a square hole, a racertrack-shaped hole, an elliptic hole, or a hole in another shape.

In some examples, at least a part of the electrode terminal 30 is located on an outer side of the first wall 211 and covers the electrode lead-out hole 2111. Optionally, the electrode terminal 30 may be entirely located on the outer side of the first wall 211. Alternatively, the electrode terminal 30 is disposed through the electrode lead-out hole 2111, a part of the electrode terminal 30 is located on the outer side of the first wall 211, and a part of the electrode terminal 30 is located on an inner side of the first wall 211.

The electrode terminal 30 and the first wall 211 are insulated from each other.

The first insulating member 40 may be entirely disposed between the electrode terminal 30 and the first wall 211, or may be only partially disposed between the electrode terminal 30 and the first wall 211.

For example, the thermal weight loss temperature of the first insulating member 40 may be 300°C, 350°C, 400°C, 450°C, 500°C, 550°C, 600°C, 650°C, 700°C, 750°C, 800°C, 850°C, 900°C, 950°C, or 1000°C.

For example, the thermal weight loss temperature of the first insulating member 40 may be a 5% thermal weight loss temperature. The 5% thermal weight loss temperature may be a temperature at which a mass of a test sample is lost by 5% relative to an initial mass of the test sample in thermogravimetric analysis. The thermal weight loss temperature of the first insulating member may be measured with reference to "GB/T27761-2011 standard test method of mass loss and residue measurement validation of thermogravimetric analyzers".

When the battery cell 7 undergoes thermal runaway due to an internal short circuit or for another reason, the battery cell 7 may maintain a high-temperature state for a period of time. The thermal weight loss temperature of the first insulating member 40 is greater than or equal to 300°C. The first insulating member 40 is not prone to weight loss or has minimal weight loss during thermal runaway of the battery cell 7, so that the first insulating member 40 can be kept between the first wall 211 and the electrode terminal 30, to reduce a risk of conduction between the electrode terminal 30 and the first wall 211. Correspondingly, even if the electrode terminal 30 and the first wall 211 are electrically connected to another battery cell 7 or an external power supply, the first insulating member 40 can suppress a current between the electrode terminal 30 and the first wall 211, reduce continuous heat generation of the electrode terminal 30 and the first wall 211, reduce thermal impact on another surrounding battery cell 7, reduce a risk that the another battery cell 7 undergoes thermal runaway, and improve reliability.

For example, when the first wall 211 of the normal battery cell 7 and the electrode terminal 30 of the normal battery cell 7 are respectively electrically connected to the first wall 211 of the battery cell 7 that undergoes thermal runaway and the electrode terminal 30 of the battery cell 7 that undergoes thermal runaway, the first insulating member 40 may cut off a circuit between the two battery cells 7, to reduce continuous heat generation of the electrode terminal 30 of the battery cell 7 that undergoes thermal runaway and the first wall 211 of the battery cell 7 that undergoes thermal runaway, reduce thermal impact on another surrounding battery cell 7, reduce a risk that the another battery cell 7 undergoes thermal runaway, and improve reliability.

The first wall 211 and the electrode terminal 30 may be used as two electrodes of the battery cell 7, and are located on a same side of the battery cell 7. When a plurality of battery cells 7 are assembled into a group, it is convenient to implement connection between a bus component and the first wall 211 or connection between a bus component and the electrode terminal 30, thereby simplifying a structure of the battery device. Although the first wall 211 and the electrode terminal 30 have opposite polarities, the first insulating member 40 can also suppress a current between the first wall 211 and the electrode terminal 30 during thermal runaway of the battery cell 7, to reduce continuous heat generation of the electrode terminal 30 and the first wall 211, and improve reliability.

In some embodiments, the thermal weight loss temperature of the first insulating member 40 is greater than or equal to 350°C, so that a weight loss rate of the first insulating member 40 during thermal runaway of the battery cell 40 can be further reduced, a risk of failure of the first insulating member 40 is reduced, continuous heat generation of the electrode terminal 30 and the first wall 211 is reduced, thermal impact on another surrounding battery cell 7 is reduced, a risk that the another battery cell 7 undergoes thermal runaway is reduced, and reliability is improved.

In some embodiments, the thermal weight loss temperature of the first insulating member 40 is greater than or equal to 500°C, so that a weight loss rate of the first insulating member 40 during thermal runaway of the battery cell 7 can be further reduced, a risk of failure of the first insulating member 40 is reduced, continuous heat generation of the electrode terminal 30 and the first wall 211 is reduced, thermal impact on another surrounding battery cell 7 is reduced, a risk that the another battery cell 7 undergoes thermal runaway is reduced, and reliability is improved.

In some embodiments, the thermal weight loss temperature of the first insulating member 40 is greater than or equal to 550°C.

In some embodiments, a material of the first insulating member 40 includes a thermosetting material.

The thermosetting material has excellent heat resistance, can maintain relatively good stability at a high temperature, and is not likely to soften, be deformed, or decompose. During thermal runaway of the battery cell 7, an internal pressure of the housing 20 increases, causing a risk of deformation of the first wall 211. When the first wall 211 is deformed, a pressure exerted on the first insulating member 40 increases, and the first insulating member 40 including the thermosetting material is not likely to soften at a high temperature. In this way, deformation of the first insulating member 40 under the pressure can be reduced, and a risk that the first insulating member 40 is partially thinned and is penetrated is reduced, to improve insulation performance, and reduce a risk of an insulation failure.

In some embodiments, the thermosetting material may include at least one of thermosetting polyimide, thermosetting phenolic resin, or another high-temperature-resistant thermosetting material.

In some embodiments, the material of the first insulating member 40 includes one or more of thermosetting polyimide and a derivative of thermosetting polyimide.

For example, the derivative may be a product derived by replacing hydrogen an atom or atomic group in a polymer with another atom or atomic group.

The thermosetting polyimide has excellent heat resistance. During thermal runaway of the battery cell 7, the first insulating member 40 including the thermosetting polyimide can maintain good performance stability in a high-temperature environment, and the first insulating member is not prone to weight loss or has minimal weight loss, to reduce a risk of an insulation failure.

The thermosetting polyimide has a relatively high strength. During thermal runaway of the battery cell 7, the first insulating member 40 including the thermosetting polyimide can bear a relatively large load, and the first insulating member 40 is not likely to be cracked or penetrated under the pressure of the first wall 211, to reduce a risk of an insulation failure.

The thermosetting polyimide has low creep resistance. During long-term use of the battery cell 7, creep of the first insulating member 40 including the thermosetting polyimide is relatively low, and a size and a shape of the first insulating member 40 can maintain relatively good stability, to reduce a risk of an insulation failure.

The thermosetting polyimide has relatively good corrosion resistance. During assembly or use of the battery cell 7, the first insulating member 40 including the thermosetting polyimide is not prone to corrosion by an electrolyte solution, to reduce a risk of an insulation failure.

In some embodiments, the material of the first insulating member 40 includes one or more of bismaleimide, ethynyl-terminated polyimide, and norbornene dicarboxylic anhydride-terminated polyimide.

The bismaleimide, the ethynyl-terminated polyimide, and the norbornene dicarboxylic anhydride-terminated polyimide have advantages such as excellent high-temperature resistance, a high mechanical strength, and strong chemical resistance.

In some embodiments, the material of the first insulating member 40 includes polyimide-siloxane resin. The polyimide has relatively high thermal stability, and introduction of siloxane further enhances this feature. The polyimide has a relatively high strength and a relatively high modulus, and addition of the siloxane may adjust mechanical performance of a material to some extent, so that the material has better toughness and impact resistance. In addition, the polyimide-siloxane resin further has a relatively high breaking elongation, so that the first insulating member 40 can be deformed to some extent and is not easy to break when the first insulating member 40 is subject to an external force, to improve reliability and a service life of the first insulating member 40.

In some embodiments, the material of the first insulating member 40 includes cyanate ester resin-modified polyimide. Cyanate ester resin has relatively high heat resistance, and a generated triazine ring structure enables the cyanate ester resin to maintain stable at a high temperature. Polyimide is also a high-temperature-resistant material. After the cyanate ester resin and the polyimide are combined, heat resistance of a modified material is further improved, a thermal decomposition temperature is increased, and the modified material can still maintain relatively good performance in a high-temperature environment. The polyimide has an excellent strength and an excellent modulus, and can enhance mechanical performance of the cyanate ester resin. The modified material has a relatively high stretching strength, a relatively high bending strength, high hardness, and the like, and can also maintain relatively good toughness and impact resistance, so that the modified material is not easily damaged when being subjected to an external force.

In some embodiments, the material of the first insulating member 40 includes thermosetting phenolic resin. The thermosetting phenolic resin has good heat resistance, dimensional stability, and corrosion resistance.

During thermal runaway of the battery cell 7, the first insulating member 40 including the thermosetting phenolic resin can maintain good performance stability in a high-temperature environment, and the first insulating member is not prone to weight loss or has minimal weight loss, to reduce a risk of an insulation failure. A three-dimensional network structure formed after the thermosetting phenolic resin is solidified enables the thermosetting phenolic resin to have relatively good dimensional stability. During long-term use of the battery cell 7, a size and a shape of the first insulating member 40 including the thermosetting polyimide can maintain relatively good stability, to reduce a risk of an insulation failure.

In some embodiments, the insulating member 40 is fixed to at least one of the electrode terminal 30 and the first wall 211.

For example, the first insulating member 40 may be fixed to the electrode terminal 30 and/or the first wall 211 through bonding, crimping, or in another manner. For example, the electrode terminal 30 and the first wall 211 press against the first insulating member 40 from two sides, to fix the first insulating member 40.

That the first insulating member 40 is fixed to the electrode terminal 30 and/or the first wall 211 can improve stability of the first insulating member 40, and reduce offset of the first insulating member 40 when the battery cell 7 suffers from an external impact, to reduce a risk of an insulation failure.

In some embodiments, the insulating member 40 is bonded to at least one of the electrode terminal 30 and the first wall 211.

In some examples, the first insulating member 40 is bonded to the electrode terminal 30. The first insulating member 40 may be directly bonded to the electrode terminal 30. For example, an insulating material (for example, a thermosetting material) having stickiness may be directly coated on a surface of the electrode terminal 30, and the first insulating member 40 is formed after the insulating material is solidified. The first insulating member 40 may be bonded to the electrode terminal 30 through another material. For example, a surface of the first insulating member 40 may be coated with a colloid, and then the first insulating member 40 is bonded to the electrode terminal 30 through the colloid.

In some examples, the first insulating member 40 is bonded to the first wall 211. The first insulating member 40 may be directly bonded to the first wall 211. For example, an insulating material (for example, a thermosetting material) having stickiness may be directly coated on a surface of the first wall 211, and the first insulating member 40 is formed after the insulating material is solidified. The first insulating member 40 may be bonded to the first wall 211 through another material. For example, a surface of the first insulating member 40 may be coated with a colloid, and then the first insulating member 40 is bonded to the first wall 211 through the colloid.

In some examples, the first insulating member 40 is bonded to both the first wall 211 and the electrode terminal 30.

That the first insulating member 40 is bonded to the electrode terminal 30 and/or the first wall 211 can improve stability of the first insulating member 40, and reduce offset of the first insulating member 40 when the battery cell 7 suffers from an external impact, to reduce a risk of an insulation failure. A bonding process is easy to implement, and a bonding interface is well sealed.

In some embodiments, the first wall 211 includes an outer surface 2112 and an inner surface 2113 that are disposed along the thickness direction Z. A hole wall surface of the electrode lead-out hole 2111 is connected to the outer surface 2112 and the inner surface 2113.

In some embodiments, the first insulating member 40 is bonded to the first wall 211.

For example, the first insulating member 40 may be bonded to the inner surface 2113 of the first wall 211, or may be bonded to the outer surface 2112 of the first wall 211, or may be bonded to both the inner surface 2113 of the first wall 211 and the outer surface 2112 of the first wall 211.

Compared with the electrode terminal 30, the first wall 211 usually has a simple and relatively flat structure. That the first insulating member 40 is bonded to the first wall 211 can improve a form of a bonding interface and improve bonding stability of the first insulating member 40.

In some embodiments, in the thickness direction Z of the first wall 211, at least a part of the first insulating member 40 is located between the outer surface 2112 of the first wall 211 and the electrode terminal 30.

At least a part of the first insulating member 40 is located on the outer side of the first wall 211, and the first insulating member 40 may separate a part of the electrode terminal 30 that is located on the outer side of the first wall 211 from the first wall 211. When high-temperature particles emitted by another battery cell 7 are splashed onto the first insulating member 40, the first insulating member 40 has relatively good heat resistance, and the first insulating member 40 is not likely to fail under the action of the high-temperature particles, to reduce a risk of a short circuit of the battery cell 7.

In some embodiments, at least a part of the first insulating member 40 is bonded to the outer surface 2112 of the first wall 211.

In some embodiments, the first insulating member 40 protrudes from the hole wall surface of the electrode lead-out hole 2111 toward a central axis of the electrode lead-out hole 2111.

During thermal runaway of the battery cell 7, an internal pressure of the housing 20 increases, and the first wall 211 may protrude outward and be deformed. The first insulating member 40 may cover a joint between the outer surface 2112 of the first wall 211 and the hole wall surface, to reduce, when the first wall 211 protrudes outward and is deformed, a risk that the joint between the outer surface 2112 of the first wall 211 and the hole wall surface is in contact with the electrode terminal 30.

In some embodiments, the first insulating member 40 includes a thermosetting material. The first insulating member 40 includes the thermosetting material, which is not likely to soften during thermal runaway of the battery cell 7, to reduce a risk that the first insulating member 40 is penetrated by the outer surface 2112 of the first wall 211 and the hole wall surface, thereby improving insulation performance.

In some embodiments, the first insulating member 40 includes a first insulating portion 41 and a second insulating portion 42 connected to the first insulating portion 41, the first insulating portion 41 is disposed on the outer surface 2112 of the first wall 211, and the second insulating portion 42 is disposed on the hole wall surface of the electrode lead-out hole 2111.

The first insulating member 40 may cover a joint between the outer surface 2112 of the first wall 211 and the hole wall surface, to reduce, when the first wall 211 protrudes outward and is deformed, a risk that the joint between the outer surface 2112 of the first wall 211 and the hole wall surface is in contact with the electrode terminal 30.

In some embodiments, the first insulating portion 41 is bonded to the outer surface 2112, and the second insulating portion 42 is bonded to the hole wall surface of the electrode lead-out hole 2111.

In some embodiments, a first concave portion 2114 is disposed on one side of the first wall 211 along the thickness direction Z, and the electrode lead-out hole 2111 is provided on a bottom wall of the first concave portion 2114.

In some embodiments, the first insulating portion 41 is at least attached to a bottom surface of the first concave portion 2114. Optionally, the first insulating portion 41 is entirely accommodated in the first concave portion 2114, to save space occupied by the first insulating portion 41.

In some embodiments, along the thickness direction Z, a thickness of the first insulating portion 41 is less than a depth of the first concave portion 2114.

In some embodiments, the first insulating portion 41 is further attached to a side surface of the first concave portion 2114.

In some embodiments, the outer surface 2112 of the first wall 211 defines the first concave portion 2114, that is, the outer surface 2112 of the first wall 211 includes the bottom surface of the first concave portion 2114 and the side surface of the first concave portion 2114.

In some embodiments, the outer surface 2112 further includes a planar region surrounding the first concave portion 2114, the planar region is connected to the side surface of the first concave portion 2114, and the first concave portion 2114 is recessed relative to the planar region.

In some embodiments, the first insulating portion 41 is further attached to the planar region.

In some embodiments, the battery cell 7 further includes a second insulating member 70. At least a part of the second insulating member 70 is disposed between the electrode terminal 30 and the first wall 211, to insulate at least a part of the electrode terminal 30 from the first wall 211.

In some embodiments, at least a part of the second insulating member 70 is disposed between the first insulating member 40 and the electrode terminal 30.

The second insulating member 70 may be entirely disposed between the first insulating member 40 and the electrode terminal 30, or may be only partially disposed between the first insulating member 40 and the electrode terminal 30. In some examples, a part of the second insulating member 70 is further disposed between the first insulating member 40 and the first wall 211.

The first insulating member 40 and the second insulating member 70 are disposed, so that a double-layer insulating structure may be formed between the first wall 211 and the electrode terminal 30, to further improve an insulation effect, and reduce a risk of conduction between the first wall 211 and the electrode terminal 30 during thermal runaway of the battery cell 7.

In some embodiments, a compression modulus of the second insulating member 70 is less than a compression modulus of the first insulating member 40.

For example, the compression modulus of the second insulating member 70 and the compression modulus of the first insulating member 40 may be measured with reference to GB/T 1041-2008 plastics-determination of compressive properties.

During use of the battery cell 7, the first wall 211 may be deformed due to a change of an internal pressure of the battery cell 7. Particularly, during thermal runaway of the battery cell 7, an internal pressure of the housing 20 rapidly increases, which may cause the first wall 211 to protrude outward and be deformed. The compression modulus of the second insulating member 70 is relatively small, so that when the first wall 211 is deformed, the second insulating member 70 may release a stress through compression and deformation, to reduce a stress exerted on the first insulating member 40, and reduce a risk of cracking of the first insulating member 40 and a risk of an insulation failure.

In some embodiments, a material of the second insulating member 70 includes a thermoplastic material.

The thermoplastic material has advantages such as being easily formed, good flexibility, high chemical stability, and excellent electrical insulation.

The second insulating member 70 including the thermoplastic material is easily formed, and a shape of the second insulating member 70 can fit an electrode terminal 30 having a complex structure. When subject to an external force (for example, a pressure generated by deformation of the first wall), the second insulating member 70 including the thermoplastic material can be deformed to some extent and is not easy to break, and has relatively good toughness and impact resistance, thereby improving an insulation effect.

In some embodiments, a thermal weight loss temperature of the second insulating member 70 is less than the thermal weight loss temperature of the first insulating member 40.

During thermal runaway of the battery cell 7, the second insulating member 70 softens and loses weight under the action of a high temperature, so that when the first wall 211 protrudes outward and is deformed, a pressure exerted by the first wall 211 and the electrode terminal 30 on the first insulating member 40 is reduced, to reduce a risk of cracking of the first insulating member 40 and a risk of an insulation failure.

In some embodiments, in the thickness direction Z of the first wall 211, at least a part of the first insulating member 40 and at least a part of the second insulating member 70 are stacked between the first wall 211 and the electrode terminal 30.

In some examples, in the thickness direction Z of the first wall 211, at least a part of the first insulating member 40 is stacked between the first wall 211 and the second insulating member 70. In some other examples, in the thickness direction Z of the first wall 211, at least a part of the first insulating member 40 is stacked between the electrode terminal 30 and the second insulating member 70.

To implement fixing between the electrode terminal 30 and the first wall 211, generally, there is an interaction force between the electrode terminal 30 and the first wall 211 along the thickness direction Z. At least a part of the first insulating member 40 and at least a part of the second insulating member 70 are stacked along the thickness direction Z. This can reduce a risk of an insulation failure.

In some embodiments, in the thickness direction Z of the first wall 211, at least a part of the second insulating member 70 is disposed between the first insulating member 40 and the electrode terminal 30.

In a process in which the electrode terminal 30 is mounted on the first wall 211, the electrode terminal 30 usually needs to be pressed against the first wall 211. The second insulating member 70 may separate the first insulating member 40 from the electrode terminal 30, to reduce a force exerted on the first insulating member 40 in a process of mounting the electrode terminal 30, reduce a risk that the first insulating member 40 is cracked, and improve an insulation effect.

In some embodiments, in the thickness direction Z of the first wall 211, a minimum thickness of the part of the first insulating member 40 that is located between the first wall 211 and the electrode terminal 30 is t1, a minimum thickness of the part of the second insulating member 70 that is located between the first wall 211 and the electrode terminal 30 is t2, and t2 is greater than t1.

The second insulating member 70 having a relatively large thickness is disposed, to increase a creepage distance between the first wall 211 and the electrode terminal 30, thereby improving insulation performance. The first insulating member 40 having a relatively high thermal weight loss temperature may have a relatively small thickness, to reduce forming difficulty of the first insulating member 40 and reduce costs.

In some embodiments, the first insulating member 40 is bonded to the first wall 211, and at least a part of the second insulating member 70 is clamped between the electrode terminal 30 and the first insulating member 40.

In some embodiments, the material of the second insulating member 70 is plastic. For example, the material of the second insulating member 70 is tetrafluoroethylene-perfluoroalkoxy vinyl ether copolymer (PFA).

In some embodiments, the electrode terminal 30 includes a terminal body 31 and a first limiting portion 32, at least a part of the terminal body 31 is accommodated in the electrode lead-out hole 2111, the first limiting portion 32 is connected to the terminal body 31, and at least a part of the first limiting portion 32 protrudes from an outer peripheral surface of the terminal body 31.

In some examples, the first limiting portion 32 and the terminal body 31 may be of an integrally formed structure. In some other examples, the first limiting portion 32 and the terminal body 31 are independently formed, and the first limiting portion 32 and the terminal body 31 are connected through welding, riveting, bonding, or in another manner.

The first limiting portion 32 may be located on the inner side of the first wall 211, or may be located on the outer side of the first wall 211.

In some embodiments, in the thickness direction Z of the first wall 211, the first limiting portion 32 at least partially overlaps the first wall 211.

The first wall 211 and the first limiting portion 32 may limit each other in the thickness direction Z, thereby improving stability of the electrode terminal 30.

In some embodiments, in the thickness direction Z of the first wall 211, at least a part of the first insulating member 40 is located between the first wall 211 and the first limiting portion 32.

The first insulating member 40 may be entirely located between the first wall 211 and the first limiting portion 32, or may be only partially located between the first wall 211 and the first limiting portion 32.

During thermal runaway of the battery cell 7, the first insulating member 40 may be kept between the first limiting portion 32 and the first wall 211, to reduce a risk that the first limiting portion 32 is in direct contact with the first wall 211, so as to suppress a current between the electrode terminal 30 and the first wall 211, and reduce continuous heat generation of the electrode terminal 30 and the first wall 211.

In some embodiments, the first limiting portion 32 and the terminal body 31 are of an integrally formed structure.

In some embodiments, the electrode terminal 30 further includes the second limiting portion 33 connected to the terminal body 31, at least a part of the second limiting portion 33 protrudes from the outer peripheral surface of the terminal body 31, and in the thickness direction Z of the first wall 211, the first limiting portion 32 and the second limiting portion 33 are respectively located on the two sides of the first wall 211.

In some examples, the second limiting portion 33 and the terminal body 31 may be of an integrally formed structure. In some other examples, the second limiting portion 33 and the terminal body 31 are independently formed, and are connected through welding, riveting, bonding, or in another manner.

One of the first limiting portion 32 and the second limiting portion 33 is located on the inner side of the first wall 211, and the other of the first limiting portion 32 and the second limiting portion 33 is located on the outer side of the first wall 211.

The first limiting portion 32 and the second limiting portion 33 can implement fixing of the electrode terminal 30 in the thickness direction Z of the first wall 211.

In some embodiments, one of the first limiting portion 32 and the second limiting portion 33 is formed after the electrode terminal 30 passes through the electrode lead-out hole 2111.

In some examples, the first limiting portion 32 is located on the outer side of the first wall 211, and the electrode terminal 30 is riveted to the first wall 211 from the outer side of the first wall 211, to form the first limiting portion 32. In some examples, the first limiting portion 32 is located on the inner side of the first wall 211. For example, the electrode terminal 30 is riveted to the first wall 211 from the inner side of the first wall 211, to form the first limiting portion 32. In some examples, the second limiting portion 33 is located on the outer side of the first wall 211, and the electrode terminal 30 is riveted to the first wall 211 from the outer side of the first wall 211, to form the second limiting portion 33. In some examples, the second limiting portion 33 is located on the inner side of the first wall 211. For example, the electrode terminal 30 is riveted to the first wall 211 from the inner side of the first wall 211, to form the second limiting portion 33.

In some embodiments, the first limiting portion 32 is located on the outer side of the first wall 211, and the second limiting portion 33 is located on the inner side of the first wall 211.

In some embodiments, the first concave portion 2114 is disposed on one side of the first wall 211 that faces the first limiting portion 32.

In some embodiments, at least a part of the first limiting portion 32 is accommodated in the first concave portion 2114.

In some embodiments, the electrode terminal 30 includes a terminal body 31, a first limiting portion 32, and a second limiting portion 33, at least a part of the terminal body 31 is accommodated in the electrode lead-out hole 2111, both the first limiting portion 32 and the second limiting portion 33 are connected to the terminal body 31, at least a part of the first limiting portion 32 protrudes from an outer peripheral surface of the terminal body 31, and at least a part of the second limiting portion 33 protrudes from the outer peripheral surface of the terminal body 31. At least a part of the first insulating member 40 is attached to a surface of the first wall 211 that faces the first limiting portion 32. In the thickness direction Z of the first wall 211, the first limiting portion 32 and the second limiting portion 33 are respectively located on two sides of the first wall 211, and at least a part of the second insulating member 70 is disposed between the first limiting portion 32 and the first insulating member 40.

To improve stability of the electrode terminal 30, the first limiting portion 32 and the second limiting portion 33 may clamp the first wall 211 from two sides. The second insulating member 70 may separate the first insulating member 40 from the first limiting portion 32, to reduce a pressure exerted by the first limiting portion 32 on the first insulating member 40, reduce a risk that the first insulating member 40 is cracked, and improve an insulation effect.

In some embodiments, the electrode terminal 30 is riveted to the first wall 211. The first limiting portion 32 is configured to be formed after the electrode terminal 30 passes through the electrode lead-out hole 2111.

For example, when the first wall 211 and the electrode terminal 30 are assembled, the electrode terminal 30 may first pass through the electrode lead-out hole 2111, and then an end portion of the electrode terminal 30 is pressed, so that the electrode terminal 30 forms a flanged structure. The flanged structure may be used as the first limiting portion 32.

In a forming process of the first limiting portion 32, the second insulating member 70 may separate the first limiting portion 32 from the first insulating member 40, to reduce an action force transmitted to the first insulating member 40, reduce a risk that the first insulating member 40 is cracked, and improve an insulation effect.

In some embodiments, the first insulating member 40 includes a first insulating portion 41 and a second insulating portion 42 that are connected. The first insulating member 40 includes a first insulating portion 41 and a second insulating portion 42 that are connected, at least a part of the first insulating portion 41 is located between the first limiting portion 32 and the first wall 211, and at least a part of the second insulating portion 42 is located in the electrode lead-out hole 2111. The first insulating portion 41 may isolate the first limiting portion 32 from the first wall 211, and the second insulating portion 42 may isolate at least a part of the terminal body 31 from the first wall 211, to reduce a risk that the first wall 211 is in direct contact with the electrode terminal 30.

In some embodiments, the second insulating member 70 is disposed around the terminal body 31.

In some embodiments, the second insulating member 70 includes a fourth insulating portion 71 and a fifth insulating portion 72, at least a part of the fourth insulating portion 71 is disposed between the first wall 211 and the first limiting portion 32, and at least a part of the fifth insulating portion 72 is disposed in the electrode lead-out hole 2111, and is located between the hole wall surface of the electrode lead-out hole 2111 and the terminal body 31.

In some embodiments, the battery cell 7 includes a sealing member 60, and in the thickness direction Z of the first wall 211, at least a part of the sealing member 60 is disposed between the second limiting portion 33 and the first wall 211.

The second limiting portion 33 and the first wall 211 may clamp the sealing member 60 in the thickness direction Z, to seal the electrode lead-out hole 2111.

In some embodiments, a thermal weight loss temperature of the sealing member 60 is greater than or equal to 200°C. For example, the thermal weight loss temperature of the sealing member 60 may be 200°C, 250°C, 300°C, 350°C, 400°C, 450°C, 500°C, 550°C, 600°C, 650°C, 700°C, 750°C, or 800°C.

For example, the thermal weight loss temperature of the sealing member 60 may be a 5% thermal weight loss temperature. The thermal weight loss temperature of the sealing member 60 may be measured with reference to "GB/T27761-2011 standard test method of mass loss and residue measurement validation of thermogravimetric analyzers".

The sealing member 60 is not prone to weight loss or has minimal weight loss during thermal runaway of the battery cell 7, so that the sealing member 60 can be kept between the first wall 211 and the electrode terminal 30, to reduce a risk that the electrode terminal 30 is in direct contact with the first wall 211.

In some embodiments, the sealing member 60 is electrically insulating. For example, the sealing member 60 is made of an insulating material. After the battery cell 7 undergoes thermal runaway, the sealing member 60 can suppress a current between the second limiting portion 33 and the first wall 211, to reduce continuous heat generation of the electrode terminal 30 and the first wall 211, reduce a risk that another battery cell 7 undergoes thermal runaway, and improve reliability.

In some embodiments, the thermal weight loss temperature of the sealing member 60 is less than the thermal weight loss temperature of the first insulating member 40. To implement sealing, the sealing member 60 is generally in a compressed state. During thermal runaway of the battery cell 7, even if a weight loss rate of the sealing member 60 is greater than a weight loss rate of the first insulating member 40, the sealing member 60 can also be filled between the second limiting portion 33 and the first wall 211, to reduce a risk that the second limiting portion 33 is in direct contact with the first wall 211.

In some embodiments, the sealing member 60 includes a thermosetting material. The sealing member 60 including the thermosetting material can maintain relatively good stability at a high temperature, and can isolate the second limiting portion 33 from the first wall 211 during thermal runaway of the battery cell 7.

In some embodiments, a material of the sealing member 60 includes fluorine rubber. Optionally, the material of the sealing member 60 includes thermosetting fluorine rubber.

In some embodiments, the first insulating member 40 is disposed around the terminal body 31. The sealing member 60 is disposed around the terminal body 31.

In some embodiments, in the thickness direction Z, the second insulating portion 42 may abut against the sealing member 60. The first insulating member 40 and the sealing member 60 may jointly separate the first wall 211 from the electrode terminal 30.

In some embodiments, a part of the sealing member 60 and a part of the first insulating member 40 are stacked in the thickness direction Z of the first wall 211, to separate a hole wall surface of the electrode lead-out hole 2111 from the terminal body 31. In this embodiment of the present application, a risk that the terminal body 31 is in contact with the first wall 211 can be reduced.

In some embodiments, the sealing member 60 includes a first sealing portion 61 and a second sealing portion 62 that are connected, at least a part of the first sealing portion 61 is located between the second limiting portion 33 and the first wall 211, and at least a part of the second sealing portion 62 is located in the electrode lead-out hole 2111.

The first sealing portion 61 may isolate the second limiting portion 33 from the first wall 211, and the second sealing portion 62 may isolate at least a part of the terminal body 31 from the first wall 211, to reduce a risk that the first wall 211 is in direct contact with the electrode terminal 30.

In some embodiments, in the thickness direction Z, the second sealing portion 62 abuts against the second insulating portion 42, to completely isolate the terminal body 31 from the hole wall of the electrode lead-out hole 2111.

In some embodiments, along the thickness direction Z, the fifth insulating portion 72 abuts against the second sealing portion 62.

In some embodiments, the battery cell 7 further includes a third insulating member 80, and in the thickness direction Z, at least a part of the third insulating member 80 is disposed between the second limiting portion 33 and the first wall 211.

When the battery cell 7 normally operates, the third insulating member 80 may separate the second limiting portion 33 from the first wall 211, to reduce a risk of a short circuit of the battery cell 7. During thermal runaway of the battery cell 7, even if the third insulating member 80 is melted at a high temperature, the sealing member 60 can also be kept between the second limiting portion 33 and the first wall 211, to reduce a risk that the second limiting portion 33 is in direct contact with the first wall 211, so as to suppress a current between the electrode terminal 30 and the first wall 211.

In some embodiments, at least a part of the third insulating member 80 is disposed between the first wall 211 and the first tab 10a.

In some embodiments, a material of the third insulating member 80 includes a thermoplastic material. Optionally, the material of the third insulating member 80 is plastic.

In some embodiments, the third insulating member 80 is disposed around the terminal body 31.

In some embodiments, along a direction away from the terminal body 31, an outer periphery of the third insulating member 80 extends beyond the first tab 10a.

In some embodiments, thermal conductivity of the first insulating member 40 is less than thermal conductivity of the first wall 211, and the thermal conductivity of the first insulating member 40 is less than thermal conductivity of the electrode terminal 30.

Compared with the first wall 211 and the electrode terminal 30, the first insulating member 40 has a relatively small thermal conductivity. The first insulating member 40 may relieve heat conduction during thermal runaway of the battery cell 7, reduce weight loss of the first insulating member 40, and reduce a risk of an insulation failure.

In some embodiments, the thermal conductivity of the first wall 211 is less than the thermal conductivity of the electrode terminal 30. During thermal runaway of the battery cell 7, a heated area of the first wall 211 is relatively large, and the first wall 211 is prone to heating up under heating. The first wall 211 has a relatively small thermal conductivity. In this way, heat conducted from the first wall 211 to the first insulating member 40 can be reduced, to reduce thermal weight loss of the first insulating member 40 and reduce a risk of an insulation failure.

In some embodiments, the thermal conductivity of the first wall 211 is less than or equal to 100 W/(m·K).

In some embodiments, a material of the first wall 211 is steel. A material of the electrode terminal 30 is aluminum or an aluminum alloy.

In some embodiments, the battery cell 7 further includes a pressure relief mechanism 50 disposed in the housing 20.

The pressure relief mechanism 50 may be disposed on the first wall 211, or may be disposed on another wall of the housing 20.

For example, the pressure relief mechanism 50 is configured to be actuated when an internal pressure or an internal temperature of the battery cell 7 reaches a predetermined threshold, to release the internal pressure or the internal temperature. When the internal pressure or the internal temperature of the battery cell 7 reaches the predetermined threshold, the pressure relief mechanism 50 performs an action or a weakened structure disposed in the pressure relief mechanism 50 is damaged, to form an opening or channel for releasing the internal pressure or the internal temperature. The threshold design is different according to different design requirements. The threshold may depend on a material of one or more of a positive electrode plate, a negative electrode plate, an electrolyte, and a separator in the battery cell 7.

The "actuation" mentioned in the present application means that the pressure relief mechanism generates an action or is activated to a specific state, so that the internal pressure and the internal temperature of the battery cell are released. The action generated by the pressure relief mechanism may include but is not limited to: a component in the pressure relief mechanism moves to form an exhaust channel, at least a part of the pressure relief mechanism is cracked, broken, torn, or opened, and the like. When the pressure relief mechanism is actuated, high-temperature and high-pressure substances inside the battery cell are discharged outward from an actuated position as emissions. In this way, in a case of a controllable pressure or temperature, the pressure and the temperature of the battery cell can be released, to prevent potential more serious accidents.

During thermal runaway of the battery cell 7, the pressure relief mechanism 50 may release an internal temperature and an internal pressure of the battery cell 7, to reduce a risk of explosion of the battery cell 7.

After the pressure relief mechanism 50 is actuated, a temperature of the housing 20 and a temperature of the electrode terminal 30 gradually decrease, to reduce a risk of failure of the first insulating member 40.

In some embodiments, the pressure relief mechanism 50 includes a pressure relief portion 51 and a weak portion 52 disposed around an outer periphery of the pressure relief portion 51.

The weak portion 52 is a part of the pressure relief mechanism 50 that has a relatively low strength, and is a part of the pressure relief mechanism 50 that is easily broken, crushed, torn, or opened. For example, a strength of the pressure relief mechanism 50 is lower than a strength of a part of the pressure relief mechanism 50 that is close to the weak portion 52.

In some examples, in the present application, a groove, a score, a through hole, or another structure may be provided in a predetermined region of the pressure relief mechanism 50, to reduce a partial strength of the pressure relief mechanism 50, so as to form the weak portion 52 on the pressure relief mechanism 50. For example, thinning processing is performed on the predetermined region of the pressure relief mechanism 50, and a part of the pressure relief mechanism 50 on which thinning processing is performed forms the weak portion 52. In some other examples, material processing may be performed on a predetermined region of the pressure relief mechanism 50, so that a strength of the region is lower than a strength of another region. In other words, the region is the weak portion 52.

The weak portion 52 can be cracked when an internal pressure or an internal temperature of the battery cell 7 reaches a threshold. The pressure relief portion 51 may be a part that is of the pressure relief mechanism 50 and that is used for forming a pressure relief channel when the weak portion 52 is cracked.

In some examples, the weak portion 52 may surround the pressure relief portion 51. During thermal runaway of the battery cell 7, at least a part of the weak portion 52 is cracked. For example, the weak portion 52 is completely cracked, and the pressure relief portion 51 is separated from the housing 20, to form a pressure relief channel. For example, the weak portion 52 is partially cracked, and the pressure relief portion 51 flips outward under the internal pressure of the battery cell 7, to form a pressure relief channel.

In some other examples, the weak portion 52 may also partially surround the pressure relief portion 51. A connection line between two ends of the weak portion 52 and the weak portion 52 jointly define the pressure relief portion 51. During thermal runaway of the battery cell 7, the weak portion 52 is cracked, and the pressure relief portion 51 can flip, under the action of the internal pressure of the battery cell 7, outward by using the connection line between the two ends of the weak portion 52 as an axial direction, to form a pressure relief channel. Optionally, a center of the pressure relief portion 51 is used as a circle center, a connection line between one end of the weak portion 52 and the circle center is L1, a connection line between the other end of the weak portion 52 and the circle center is L2, an angle α between L1 and L2 is greater than or equal to 180°, and the angle α is opposite to the weak portion 52. Optionally, α is greater than or equal to 270°.

In some embodiments, an area of the pressure relief portion 51 is greater than an area of the electrode lead-out hole 2111.

For example, the area of the electrode lead-out hole 2111 may be an area of a smallest cross section that is of the electrode lead-out hole 2111 and that is perpendicular to an axial direction of the electrode lead-out hole 2111. The area of the pressure relief portion 51 may be an area of a smallest cross section that is of the pressure relief portion 51 and that is perpendicular to a thickness direction Z of the pressure relief portion 51.

Compared with the electrode lead-out hole 2111, the pressure relief portion 51 may have a relatively large area. In this way, during thermal runaway of the battery cell 7, the internal temperature and the internal pressure of the battery cell 7 can be quickly released. Compared with the pressure relief portion 51, the electrode lead-out hole 2111 may have a relatively small area. In this way, impact of the electrode lead-out hole 2111 on a strength of the first wall 211 can be reduced, deformation of a part of the first wall 211 that is close to the electrode lead-out hole 2111 is reduced, and a risk of failure of the first insulating member 40 is reduced.

In some embodiments, the pressure relief part 51 is in a shape of a circle, and a diameter ϕ1 of the pressure relief portion 51 satisfies: 20 mm≤ϕ1≤35 mm. Optionally, 22 mm≤ϕ1≤32 mm.

In some embodiments, the electrode lead-out hole 2111 is a circular hole, and a diameter ϕ3 of the electrode lead-out hole 2111 satisfies: 8 mm≤ϕ3≤25 mm. Optionally, 10 mm≤ϕ3≤20 mm.

In some embodiments, the housing 20 includes a second wall 20a, and the pressure relief mechanism 50 is disposed on the second wall 20a.

For example, the second wall 20a may be a wall of the housing 20 that is directly connected to the first wall 211, or may be a wall of the housing 20 that is opposite to the first wall 211.

In some examples, the pressure relief mechanism 50 and the second wall 20a are independently formed members, and the pressure relief mechanism 50 and the second wall 20a are connected through welding, bonding, or in another manner. In some other embodiments, the pressure relief mechanism 50 and the second wall 20a are integrally formed members. In other words, the pressure relief mechanism 50 may form a part of the second wall 20a.

In this embodiment of the present application, the electrode terminal 30 and the pressure relief mechanism 50 are disposed on different walls, to reduce impact on the first insulating member 40 during thermal runaway of the battery cell 7, and reduce a risk of failure of the first insulating member 40.

Specifically, during thermal runaway of the battery cell 7, high-temperature gas is discharged to the outside through the pressure relief mechanism 50, and due to impact of a gas flow, a region of the housing 20 that is close to the pressure relief mechanism 50 is prone to deformation. In this embodiment of the present application, the pressure relief mechanism 50 is disposed on the second wall 20a, so that impact of a gas flow on the first wall 211 can be reduced, deformation of the first wall 211 is reduced, a risk that the first insulating member 40 is offset between the first wall 211 and the electrode terminal 30 and a risk that the first insulating member 40 is cracked are reduced, and an insulation effect is improved.

In addition, when high-temperature gas is discharged, a temperature of a region of the housing 20 that is close to the pressure relief mechanism 50 is relatively high. The pressure relief mechanism 50 on the second wall 20a are disposed, to reduce heat conducted to the first insulating member 40.

The pressure relief mechanism 50 is disposed on the second wall 20a, to further reduce high-temperature particles that are splashed near the electrode terminal 30, and reduce a risk of an insulation failure between the first wall 211 and the electrode terminal 30.

In some embodiments, the pressure relief mechanism 50 includes a pressure relief portion 51 and a weak portion 52 disposed around an outer periphery of the pressure relief portion 51. An area of a region enclosed by an outer contour of a projection of the second wall 20a along a thickness direction Z of the second wall 20a is S1, and an area of a projection of the pressure relief portion in the thickness direction Z of the second wall 20a is S2. 0.1≤S2/S1≤0.8.

For example, S2/S1 may be 0.1, 0.2, 0.3, 0.4, 0.5, 0.6, 0.7, or 0.8.

In this embodiment of the present application, S2/S1 is limited to be greater than or equal to 0.1, so that during thermal runaway of the battery cell 7, a relatively large pressure relief channel may be formed in the pressure relief mechanism 50, to improve a rate of releasing an internal temperature and an internal pressure of the battery cell 7, and reduce a risk of explosion of the battery cell 7. S2/S1 is limited to be greater than or equal to 0.1, so that time of the first insulating member 40 in a high-temperature environment can be further shortened, weight loss of the first insulating member 40 is reduced, a risk of an insulation failure is reduced, and reliability of the battery cell 7 is improved.

S2/S1 is limited to be less than or equal to 0.8, so that a range of the weak portion 52 may be limited, impact of setting the weak portion 52 on a strength of the second wall 20a is reduced, a risk that the weak portion 52 is cracked in a normal use process of the battery cell 7 is reduced, and reliability of the battery cell 7 is improved.

In some embodiments, 0.3≤S2/S1≤0.7, which may further improve the reliability of the battery cell 7.

In some embodiments, the pressure relief mechanism 50 and the second wall 20a are integrally formed. For example, the second wall 20a is provided with a third concave portion 221, and the weak portion 52 includes a bottom wall of the third concave portion 221. The third concave portion 221 is disposed around the pressure relief portion 51.

In some embodiments, the battery cell 7 is a cylindrical battery cell. The cylindrical battery cell has advantages such as a mature production process, good consistency, good heat dissipation performance, and high grouping efficiency.

In some embodiments, the first wall 211 and the second wall 20a are disposed opposite to each other along an axial direction of the cylindrical battery cell. The pressure relief mechanism 50 includes the pressure relief portion 51 and the weak portion 52 disposed around the outer periphery of the pressure relief portion 51, and the pressure relief portion 51 is in a shape of a circle. A diameter ϕ1 of the pressure relief portion 51 and a diameter ϕ2 of the cylindrical battery cell satisfy the following relationship:
$0.35 \leq ϕ 1 / ϕ 2 \leq 0.85 .$

For example, ϕ1/ϕ2 may be 0.35, 0.40, 0.45, 0.50, 0.55, 0.60, 0.65, 0.70, 0.75, 0.80, or 0.85.

For example, the axial direction of the cylindrical battery cell is parallel to the thickness direction Z.

In this embodiment of the present application, ϕ1/ϕ2 is limited to be greater than or equal to 0.35, so that during thermal runaway of the battery cell 7, a relatively large pressure relief channel may be formed in the pressure relief mechanism 50, to improve a rate of releasing an internal temperature and an internal pressure of the battery cell 7, and reduce a risk of explosion of the battery cell 7. ϕ1/ϕ2 is limited to be greater than or equal to 0.35, so that time of the first insulating member 40 in a high-temperature environment can be further shortened, weight loss of the first insulating member 40 is reduced, a risk of an insulation failure is reduced, and reliability of the battery cell 7 is improved.

ϕ1/ϕ2 is limited to be less than or equal to 0.85, so that a range of the weak portion 52 may be limited, impact of setting the weak portion 52 on a strength of the second wall 20a is reduced, a risk that the weak portion 52 is cracked in a normal use process of the battery cell 7 is reduced, and reliability of the battery cell 7 is improved.

In some embodiments, the battery cell 7 is a cylindrical battery cell, and a diameter ϕ2 of the cylindrical battery cell is greater than or equal to 35 mm and less than or equal to 70 mm.

For example, the diameter ϕ2 of the cylindrical battery cell is 35 mm, 40 mm, 45 mm, 50 mm, 55 mm, 60 mm, 65 mm, or 70 mm.

Setting the diameter ϕ2 of the cylindrical battery cell to be greater than or equal to 35 mm can improve a capacity and an energy density of the cylindrical battery cell. The diameter of the cylindrical battery cell is related to heat generation during thermal runaway of the cylindrical battery cell. The diameter of the cylindrical battery cell is set to be less than or equal to 70 mm, to limit a maximum temperature of the cylindrical battery cell during thermal runaway, and reduce a risk of failure of the first insulating member 40.

Optionally, the diameter ϕ2 of the cylindrical battery cell ranges from 45 mm to 60 mm.

In some embodiments, a height of the housing 20 ranges from 50 mm to 150 mm. For example, the height of the housing 20 is 50 mm, 55 mm, 60 mm, 65 mm, 70 mm, 75 mm, 80 mm, 85 mm, 90 mm, 95 mm, 100 mm, 105 mm, 110 mm, 115 mm, 120 mm, 125 mm, 130 mm, 135 mm, 140 mm, 145 mm, or 150 mm.

Optionally, the height of the housing 20 ranges from 60 mm to 100 mm.

In some embodiments, the height of the housing 20 is 1.3 times to 4 times a diameter of the housing 20. For example, the height of the housing 20 may be a size of the housing 20 along an axial direction of the cylindrical battery cell.

Optionally, the height of the housing 20 is 1.3 times, 1.4 times, 1.5 times, 1.6 times, 1.7 times, 1.8 times, 1.9 times, 2.0 times, 2.1 times, 2.2 times, 2.3 times, 2.4 times, 2.5 times, 2.6 times, 2.7 times, 2.8 times, 2.9 times, 3.0 times, 3.1 times, 3.2 times, 3.3 times, 3.4 times, 3.5 times, 3.6 times, 3.7 times, 3.8 times, 3.9 times, or 4.0 times the diameter of the housing 20.

When the housing 20 satisfies the foregoing size requirement, structural stability of the housing 20 can be relatively high, and use reliability of the cylindrical battery cell can be improved.

In some embodiments, the height of the housing 20 is 1.5 times to 2.5 times the diameter of the housing 20.

In some embodiments, a thickness t3 of the first wall 211 is greater than a thickness t4 of the second wall 20a.

During thermal runaway of the battery cell 7, deformation of the first wall 211 is relatively small compared with that of the second wall 20a, to reduce a risk that the first insulating member 40 is offset between the first wall 211 and the electrode terminal 30 and a risk that the first insulating member 40 is cracked, improve an insulation effect, and improve reliability of the battery cell 7. During thermal runaway of the battery cell 7, compared with the first wall 211, the second wall 20a is more likely to protrude outward and be deformed. In this way, a gas flow channel on an inner side of the second wall 20a may be enlarged, thereby improving gas discharging efficiency.

In some embodiments, t3/t4≥1.5.

In some embodiments, 0.5 mm≤t3≤2 mm. Optionally, 0.5 mm≤t3≤1.5 mm.

In some embodiments, 0.3 mm≤t4≤1.8 mm. Optionally, 0.4 mm≤t4≤1.3 mm.

In some embodiments, the first wall 211 and the second wall 20a are respectively located on the two sides of the electrode assembly 10. The housing 20 further includes a side wall 212. The side wall 212 surrounds the electrode assembly 10, and the side wall 212 is connected to the first wall 211 and the second wall 20a.

In some examples, the side wall 212 and the first wall 211 may be integrally formed. In some other examples, the side wall 212 and the first wall 211 may alternatively be independently formed, and are integrally connected through bonding, clamping, welding, or in another manner.

In some examples, the side wall 212 and the second wall 20a may be integrally formed. In some other examples, the side wall 212 and the second wall 20a may alternatively be independently formed and integrally connected through bonding, clamping, welding, or in another manner.

In some examples, the battery cell 7 is a cylindrical battery cell, and the side wall 212 may have a cylindrical structure. In some other examples, the battery cell 7 is a square-housing battery cell, and the side wall 212 may have a square-cylinder structure.

During thermal runaway of the battery cell 7, high-temperature gas flows through a pressure relief channel formed in the pressure relief mechanism 50. In a process of releasing the high-temperature gas, a part of the housing 20 that is close to the pressure relief channel is easily deformed under the action of a gas flow.

In this embodiment of the present application, the electrode terminal 30 and the pressure relief mechanism 50 are respectively disposed on the two sides of the electrode assembly 10, so that deformation of the first wall 211 can be reduced in a process of releasing the high-temperature gas, a risk that the first insulating member 40 is offset between the first wall 211 and the electrode terminal 30 and a risk that the first insulating member 40 is cracked are reduced, an insulation effect is improved, and reliability of the battery cell 7 is improved.

In a process of releasing the high-temperature gas, the high-temperature gas conducts a part of heat to the second wall 20a. The second wall 20a is relatively far from the first wall 211, so that heat conducted to the first wall 211 and heat conducted to the first insulating member 40 can be reduced, to reduce thermal weight loss of the first insulating member 40, improve an insulation effect, and improve reliability of the battery cell 7.

In some embodiments, the thickness of the first wall 211 is greater than a thickness of the side wall 212.

During thermal runaway of the battery cell 7, deformation of the first wall 211 having a relatively large thickness is relatively small, to reduce a risk that the first insulating member 40 is offset between the first wall 211 and the electrode terminal 30 and a risk that the first insulating member 40 is cracked, improve an insulation effect, and improve reliability of the battery cell 7. During thermal runaway of the battery cell 7, a side wall 212 having a relatively small thickness may protrude outward and be deformed. In this way, a distance between the side wall 212 and the electrode assembly 10 may be increased, to facilitate gas discharge.

In some embodiments, the housing 20 includes a shell 21 and an end cap 22, the shell 21 includes the first wall 211 and the side wall 212 that are integrally formed, the end cap 22 is the second wall 20a, and the end cap 22 is sealingly connected to the side wall 212.

The end cap 22 and the side wall 212 may be insulated from each other, or may be electrically connected.

One end of the shell 21 that is away from the first wall 211 has an opening, and the end cap 22 covers the opening of the shell 21.

The first wall 211 and the side wall 212 are integrally formed, and a connection strength between the first wall 211 and the side wall 212 is relatively high. During thermal runaway of the battery cell 7, the side wall 212 may bind the first wall 211, to reduce deformation of the first wall 211 and reduce a risk that the first insulating member 40 is offset between the first wall 211 and the electrode terminal 30 and a risk that the first insulating member 40 is cracked, improve an insulation effect, and improve reliability of the battery cell 7.

In some embodiments, a material of the side wall 212 includes steel.

In some embodiments, a thickness of the side wall 212 ranges from 0.3 mm to 1.5 mm.

For example, the thickness of the side wall 212 is 0.3 mm, 0.31 mm, 0.32 mm, 0.33 mm, 0.35 mm, 0.38 mm, 0.40 mm, 0.42 mm, 0.45 mm, 0.5 mm, 0.55 mm, 0.6 mm, 0.65 mm, 0.7 mm, 0.75 mm, 0.8 mm, 0.85 mm, 0.9 mm, 0.95 mm, 1 mm, 1.05 mm, 1.1 mm, 1.15 mm, 1.2 mm, 1.3 mm, 1.35 mm, 1.4 mm, 1.45 mm, or 1.5 mm.

In this embodiment of the present application, the thickness of the side wall 212 has a meaning well-known in the art, and may be measured by using a device and a method well-known in the art, for example, may be measured by using a spiral micrometer or a vernier caliper.

For example, the material of the side wall 212 includes stainless steel.

In some embodiments, the thickness of the side wall 212 ranges from 0.3 mm to 1.2 mm.

In some embodiments, the thickness of the side wall 212 ranges from 0.3 mm to 0.9 mm, and optionally, ranges from 0.3 mm to 0.6 mm.

In some embodiments, the material of the first wall 211 is the same as the material of the side wall 212.

In some embodiments, a material of the end cap 22 is steel.

In some embodiments, a center of the electrode assembly 10 is provided with a first through hole 10d.

In some examples, the electrode assembly 10 has a winding structure, and the first through hole 10d is formed at a winding center of the electrode assembly 10.

In some embodiments, along an extension direction of the first through hole 10d, the first through hole 10d is provided between the electrode terminal 30 and the pressure relief mechanism 50.

During thermal runaway of the battery cell 7, gas between the electrode assembly 10 and the first wall 211 may flow to the pressure relief mechanism 50 through the first through hole 10d, to reduce a pressure exerted on the first wall 211 and the electrode terminal 30, reduce deformation of the first wall 211, reduce a risk that the first insulating member 40 is offset between the first wall 211 and the electrode terminal 30 and a risk that the first insulating member 40 is cracked, and improve insulation reliability.

In some embodiments, the extension direction of the first through hole 10d is parallel to the thickness direction Z of the first wall 211.

In some embodiments, the first tab 10a is disposed at one end of the electrode assembly 10 that faces the first wall 211, and the second tab 10b is disposed at one end of the electrode assembly 10 that faces the second wall 20a. The first tab 10a and the second tab 10b are respectively disposed at two opposite ends of the electrode assembly 10, so that a risk that the first tab 10a is in contact with the second tab 10b can be reduced.

In some other embodiments, both the first tab 10a and the second tab 10b are disposed at one end of the electrode assembly 10 that faces the first wall 211. The second tab 10b may be directly connected to the first wall 211, or may be indirectly connected to the first wall 211 through another conductive structure.

In some embodiments, the battery cell 7 further includes a first current collecting member 81, and the first current collecting member 81 is connected to the first tab 10a and the electrode terminal 30.

In some embodiments, the first current collecting member 81 is located on a side of the first tab 10a that faces the first wall 211 and is connected to the first tab 10a. The electrode terminal 30 abuts against and is connected to a surface of the first current collecting member 81 that faces the first wall 211.

The first current collecting member 81 may serve as an adapter, to implement electrical connection between the first tab 10a and the electrode terminal 30.

In some embodiments, the electrode terminal 30 is provided with a terminal concave portion 34. A bottom wall of the terminal concave portion 34 is welded to the first current collecting member 81.

The terminal concave portion 34 may be disposed on one side of the electrode terminal 30 that faces the first current collecting member 81, or may be disposed on one side of the electrode terminal 30 that faces away from the first current collecting member 81.

The terminal concave portion 34 is disposed, so that a thickness of the bottom wall of the terminal concave portion 34 can be reduced, power required for externally welding the electrode terminal 30 and the first current collecting member 81 is reduced, a risk that particles generated through welding fall into the housing 20 is reduced, and reliability of the battery cell 7 is improved.

In some embodiments, the terminal concave portion 34 is disposed on one side of the electrode terminal 30 that faces away from the first current collecting member 81.

In some embodiments, one terminal concave portion 34 is disposed on one side of the electrode terminal 30 that faces the first current collecting member 81, and another terminal concave portion 34 is disposed on one side of the electrode terminal 30 that faces away from the first current collecting member 81. Parts corresponding to bottom surfaces of the two terminal concave portion 34 are welded to the first current collecting member 81.

In some embodiments, a bottom wall of the terminal concave portion 34 is provided with a second through hole 311, and the second through hole 311 may be used for injecting an electrolyte.

In some embodiments, the battery cell 7 further includes a cover plate 82. The cover plate 82 is connected to the electrode terminal 30 and is configured to separate the second through hole 311 from external space of the battery cell 7.

In some embodiments, at least a part of the cover plate 82 is accommodated in the terminal concave portion 34.

In some embodiments, the battery cell 7 further includes a sealing nail 83, and the sealing nail 83 is inserted into the second through hole 311 and is configured to seal the second through hole 311.

In some embodiments, the first tab 10a is a positive tab 1111, and a positive lead-out portion includes the cover plate 82 and the electrode terminal 30. Alternatively, the first tab 10a is a negative tab 1211, and a negative lead-out portion includes the cover plate 82 and the electrode terminal 30.

In some embodiments, the terminal concave portion 34 is formed on the terminal body 31.

In some embodiments, the battery cell 7 further includes a second current collecting member 84, the second tab 10b is connected to the second current collecting member 84, and at least one of the side wall 212 and the second wall 20a is connected to the second current collecting member 84, to enable the side wall 212 to be electrically connected to the first wall 211 and the second current collecting member 84.

In some examples, the second current collecting member 84 is connected to the second wall 20a, and the second wall 20a is electrically connected to the side wall 212. The second tab 10b is electrically connected to the first wall 211 through the second current collecting member 84, the second wall 20a, and the side wall 212.

In some other examples, the second current collecting member 84 is connected to the side wall 212. The second tab 10b is electrically connected to the first wall 211 through the second current collecting member 84 and the side wall 212. Optionally, the first wall 211 and the side wall 212 are insulated from each other.

Before the battery cell 7 undergoes thermal runaway and the pressure relief mechanism 50 is actuated, the side wall 212 or the second wall 20a may bind the first wall 211 of the electrode terminal 30 through the second current collecting member 84, the electrode assembly 10, and the first current collecting member 81, to reduce deformation of the first wall 211 in a process of increasing an internal pressure of the battery cell 7.

In some embodiments, the second current collecting member 84 is connected to the second wall 20a. Optionally, the second wall 20a is welded to the side wall 212.

In some embodiments, the electrode assembly 10 includes a positive electrode plate 11, the positive electrode plate 11 includes a positive electrode current collector 111 and a positive electrode film layer 112 disposed on at least one side of the positive electrode current collector 111, the positive electrode film layer 112 includes a positive electrode active material, and the positive electrode active material includes a layered transition metal oxide.

The layered transition metal oxide includes at least one of a compound with a formula of LiₐNi_{b}Co_{c}M_{d}OₑA_{f} and a modified compound of the layered transition metal oxide, 0.8≤a≤1.2, 0.8≤b≤0.95, 0<c<1, 0<d<1, 1≤e≤2, and 0≤f≤1, M includes at least one of Mn, Al, Zr, Zn, Cu, Cr, Mg, Fe, V, Ti, and B, and A includes at least one of N, F, S, and Cl.

For example, b is 0.8, 0.82, 0.84, 0.85, 0.88, 0.9, 0.92, 0.94, or 0.95.

For example, an example of the layered transition metal oxide may include, but is not limited to, at least one of LiNi_{0.8}Co_{0.1}Mn_{0.1}O₂ (also abbreviated as NCM₈₁₁), LiNi_{0.9}Co_{0.05}Mn_{0.05}O₂ (also abbreviated as Ni₉₀), a lithium-nickel-cobalt-aluminum oxide (for example, LiNi_{0.80}Co_{0.15}Al_{0.05}O₂), and a modified compound of the layered transition metal oxide.

A battery cell 7 having a relatively high content of Ni has advantages such as a high energy density, good low-temperature performance, and good charging and discharging performance.

Specifically, the positive electrode film layer 112 has a relatively high content of Ni, and can store more electric energy, so that an energy density of the battery cell 7 is significantly improved. With an increase in the content of Ni, a usage amount of cobalt is relatively reduced. Cobalt is scarce and expensive metal. Reduction in the usage amount of cobalt can reduce costs of the battery cell 7. The battery cell 7 having a relatively high content of Ni has relatively high conductivity, which means that the battery cell 7 may operate at higher power, and can support rapid charging and high-current discharging. In a low-temperature environment, capacity fading of the battery cell 7 having a relatively high content of Ni is relatively small, and relatively high discharging efficiency can be maintained, so that the electric device can be normally used in the low-temperature environment.

However, thermal stability of the battery cell 7 having the high content of Ni is relatively poor. During thermal runaway, the battery cell 7 generates more heat and has a higher temperature increase. In this embodiment of the present application, the first insulating member 40 having high-temperature resistance is disposed between the first wall 211 and the electrode terminal 30. The first insulating member 40 can bear a high temperature generated during thermal runaway of the battery cell 7 having the high content of Ni, to suppress a current between the electrode terminal 30 and the first wall 211, and reduce continuous heat generation of the electrode terminal 30 and the first wall 211.

In this embodiment of the present application, b is set to be less than or equal to 0.95, so that a maximum temperature during thermal runaway of the battery cell 7 can be reduced, and a risk of excessive weight loss of the first insulating member 40 due to an excessively high temperature can be reduced.

In some embodiments, 0.8≤b≤0.95, and optionally, 0.85≤b≤0.90.

In some embodiments, the battery cell 7 further includes an electrolyte solution accommodated in the housing 20. The electrolyte solution includes a linear ester solvent, and a mass percentage of the linear ester solvent in the electrolyte solution ranges from 25.5 wt% to 76.5 wt%.

For example, a mass percentage of the linear ester solvent in the electrolyte solution is 25.5 wt, 26 wt%, 27 wt%, 28 wt%, 29 wt%, 30 wt%, 32 wt%, 35 wt%, 38 wt%, 40 wt%, 42 wt%, 45 wt%, 48 wt%, 50 wt%, 52 wt%, 55 wt%, 58 wt%, 60 wt%, 62 wt%, 65 wt%, 68 wt%, 70 wt%, 72 wt%, 75 wt%, 76.5 wt%, or a range formed by any two of the foregoing values.

In this embodiment of the present application, the mass percentage of the linear ester solvent is greater than or equal to 25.5 wt%, so that conductivity of the electrolyte solution is relatively high, which is conducive to improving a liquid-phase transport capability of active ions, and improving fast charging and discharging capabilities of the battery cell 7, thereby improving rate performance of the battery cell 7. The mass percentage of the linear ester solvent is greater than or equal to 25.5 wt%, so that viscosity of an electrolyte system is relatively low, and the electrolyte solution can more easily flow to wet the electrode assembly 10, thereby improving fast charging and discharging capabilities of a battery cell 7, and further improving rate performance of the battery cell 7.

During cyclic charging and discharging of the battery cell 7, the linear ester solvent may face a decomposition and gas evolution problem. In this embodiment of the present application, the mass percentage of the linear ester solvent is set to be less than or equal to 76.5 wt%, to limit an internal pressure of the battery cell 7, reduce deformation of the housing 20, reduce a risk of failure of the battery cell 7, and improve reliability.

In some embodiments, the mass percentage of the linear ester solvent in the electrolyte solution ranges from 42.5 wt% to 70 wt%, so that rate performance and use reliability of the battery cell 7 can be further taken into consideration, and cycle performance of the battery cell 7 can be improved.

In some embodiments, the linear ester solvent includes at least one of a linear carbonate ester and a linear carboxylate ester.

In some embodiments, the linear ester solvent includes the linear carbonate ester and the linear carboxylate ester. The linear carbonate ester and the linear carboxylate ester are used in cooperation, to improve conductivity of the electrolyte solution, improve liquid-phase transport kinetics of the electrolyte solution, and further improve rate performance and use reliability of the battery cell 7.

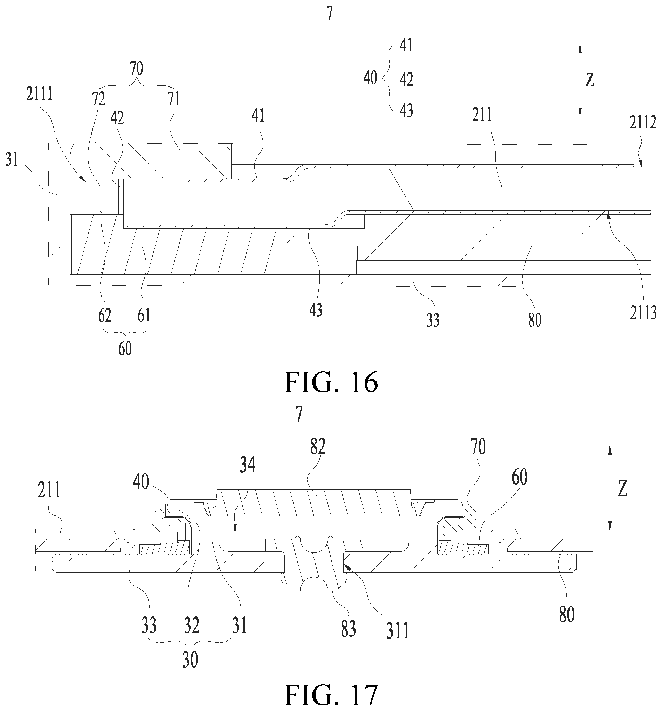

FIG. 15 is a partial cross-sectional view of a battery cell according to some embodiments of the present application; and FIG. 16 is an enlarged schematic diagram of a block in FIG. 15.

Refer to FIG. 15 and FIG. 16. In the thickness direction Z of the first wall 211, at least a part of the first insulating member 40 is located between the inner surface 2113 of the first wall 211 and the electrode terminal 30, to reduce, during thermal runaway of the battery cell 7, a risk of conduction between the electrode terminal 30 and the first wall 211.

In some embodiments, at least a part of the first insulating member 40 is bonded to the inner surface 2113 of the first wall 211.

In some embodiments, in the thickness direction Z, a part of the sealing member 60 and a part of the first insulating member 40 are stacked, to improve an isolation effect, and reduce, during thermal runaway of the battery cell 7, a risk that the electrode terminal 30 is in contact with the first wall 211.

In some embodiments, in a radial direction of the electrode lead-out hole 2111, the second insulating portion 42 at least partially overlap with the second sealing portion 62 in the electrode lead-out hole 2111.

The second insulating portion 42 and the second sealing portion 62 may have an effect of double isolation in the radial direction of the electrode lead-out hole 2111, to reduce, during thermal runaway of the battery cell 7, a risk that the electrode terminal 30 is in contact with the first wall 211.

In some embodiments, the first insulating member 40 further includes a third insulating portion 43. In the thickness direction Z, a part of the third insulating portion 43 and a part of the first sealing portion 61 are stacked between the first wall 211 and the second limiting portion 33.

In some embodiments, one end of the third insulating portion 43 that faces the terminal body 31 is connected to the second insulating portion 42.

In some embodiments, the third insulating portion 43 is bonded to the inner surface 2113. At least a part of the first sealing portion 61 is clamped between the third insulating portion 43 and the second limiting portion 33.

In some embodiments, along a direction from the terminal body 31 to the second limiting portion 33, the third insulating portion 43 protrudes from an end portion of the second limiting portion 33 that is away from the terminal body 31. The third insulating portion 43 may isolate the second limiting portion 33 from the first wall 211.

In some embodiments, in the thickness direction Z, the third insulating portion 43 covers an outer end of the first sealing portion 61 that is away from the terminal body 31 and an inner end of the third insulating member 80 that is close to the terminal body 31.

In some embodiments, in the thickness direction Z, the first sealing portion 61 partially overlaps the third insulating member 80.

In some embodiments, the first insulating portion 41 and the third insulating portion 43 are independently formed. Optionally, one of the first insulating portion 41 and the third insulating portion 43 and the second insulating portion 42 are integrally formed.

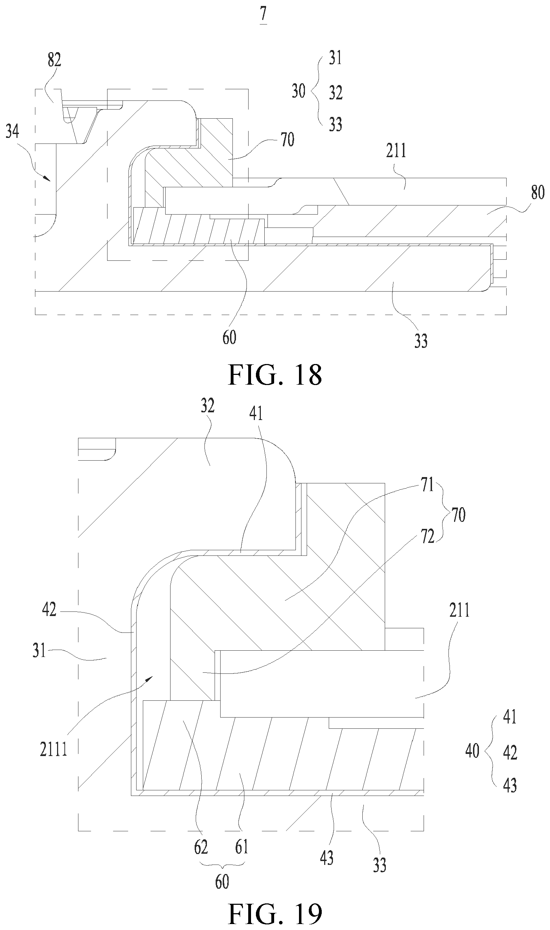

FIG. 17 is a partial cross-sectional view of a battery cell according to some embodiments of the present application; FIG. 18 is an enlarged schematic diagram of a block in FIG. 17; and FIG. 19 is an enlarged schematic diagram of a block in FIG. 18.

Referring to FIG. 17 to FIG. 19, in some embodiments, at least a part of the second insulating member 70 is disposed between the first insulating member 40 and the first wall 211.

In some embodiments, the first insulating member 40 is attached to a surface of the electrode terminal 30.

In some embodiments, the first insulating member 40 includes the first insulating portion 41, and the first insulating portion 41 is attached to a surface of the first limiting portion 32.

Optionally, one part of the first insulating portion 41 is attached to a surface of the first limiting portion 32 that faces the first wall 211, and the other part of the first insulating portion 41 is attached to an outer peripheral surface of the first limiting portion 32.

In some embodiments, the first insulating member 40 includes the second insulating portion 42 connected to the first insulating portion 41, and the second insulating portion 42 is attached to an outer peripheral surface of the terminal body 31.

In some embodiments, the first insulating member 40 includes the third insulating portion 43, and the third insulating portion 43 is attached to a surface of the second limiting portion 33.

Optionally, one part of the third insulating portion 43 is attached to a surface of the second limiting portion 33 that faces the first wall 211, and the other part of the third insulating portion 43 is attached to an outer peripheral surface of the second limiting portion 33.

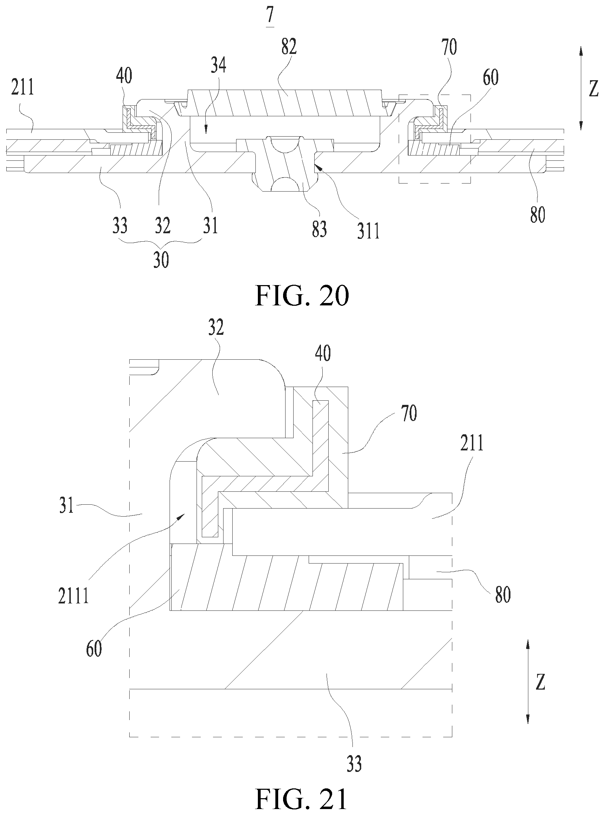

FIG. 20 is a partial cross-sectional view of a battery cell according to some other embodiments of the present application; and FIG. 21 is an enlarged schematic diagram of a block in FIG. 20.

Referring to FIG. 20 and FIG. 21, in some embodiments, one part of the second insulating member 70 is disposed between the first insulating member 40 and the first wall 211; and the other part of the second insulating member 70 is disposed between the first insulating member 40 and the electrode terminal 30.

In some embodiments, at least a part of the first insulating member 40 is embedded in the second insulating member 70.

Optionally, the first insulating member 40 is entirely embedded in the second insulating member 70.

Optionally, the first insulating member 40 includes a ceramics layer formed by aluminum oxide, titanium oxide, silicon oxide, zirconium oxide, glass, or the like.

Optionally, the first insulating member 40 includes thermosetting polyimide.

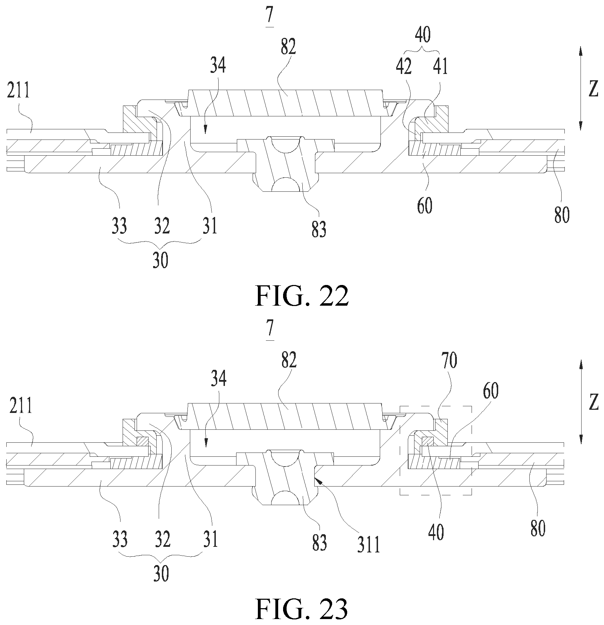

FIG. 22 is a partial cross-sectional view of a battery cell according to some other embodiments of the present application.

Referring to FIG. 22, in some embodiments, the second insulating member 70 may be omitted. The first insulating member 40 may have an insulation function when the battery cell 7 normally operates, and can keep an isolating state between the electrode terminal 30 and the first wall 211 during thermal runaway of the battery cell 7.

In some embodiments, a same material may be used for the third insulating member 80 and the first insulating member 40, to improve high-temperature resistance performance of the third insulating member 80.

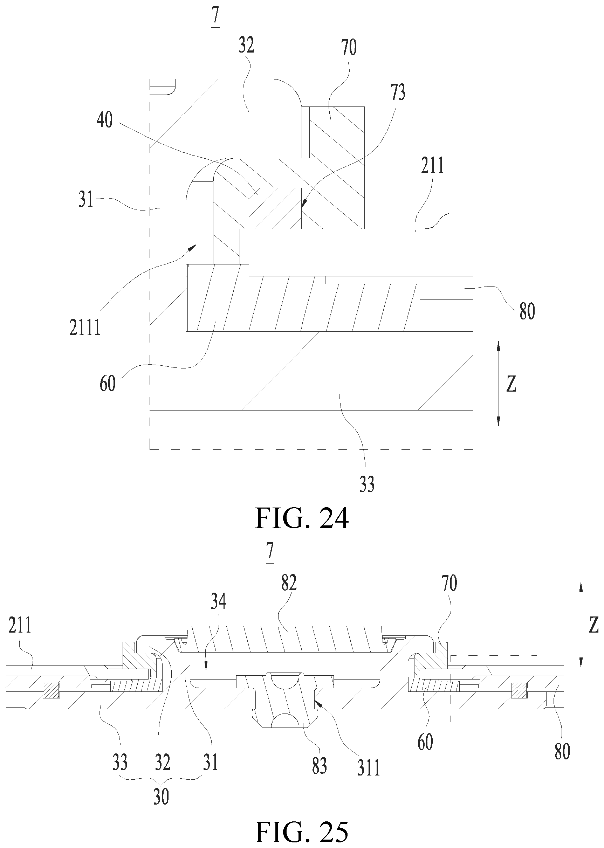

FIG. 23 is a partial cross-sectional view of a battery cell according to some other embodiments of the present application; and FIG. 24 is an enlarged schematic diagram of a block in FIG. 23.

Referring to FIG. 23 and FIG. 24, in some embodiments, in the thickness direction Z, the first insulating member 40 at least partially overlaps the second insulating member 70.

In some embodiments, in the thickness direction Z, at least a part of the first insulating member 40 is disposed between the second insulating member 70 and the first wall 211.

In some embodiments, the first insulating member 40 is annular. The first insulating member 40 is disposed around the terminal body 31. In some other embodiments, a quantity of first insulating members 40 is more than one, and the plurality of first insulating members 40 are circumferentially spaced apart around the terminal body 31.

In some embodiments, the second insulating member 70 is provided with a fourth concave portion 73, and at least a part of the first insulating member 40 is accommodated in the fourth concave portion 73.

In some embodiments, the first insulating member 40 may be a ceramic member. For example, the first insulating member 40 may be formed by aluminum oxide, titanium oxide, silicon oxide, zirconium oxide, glass, or the like.

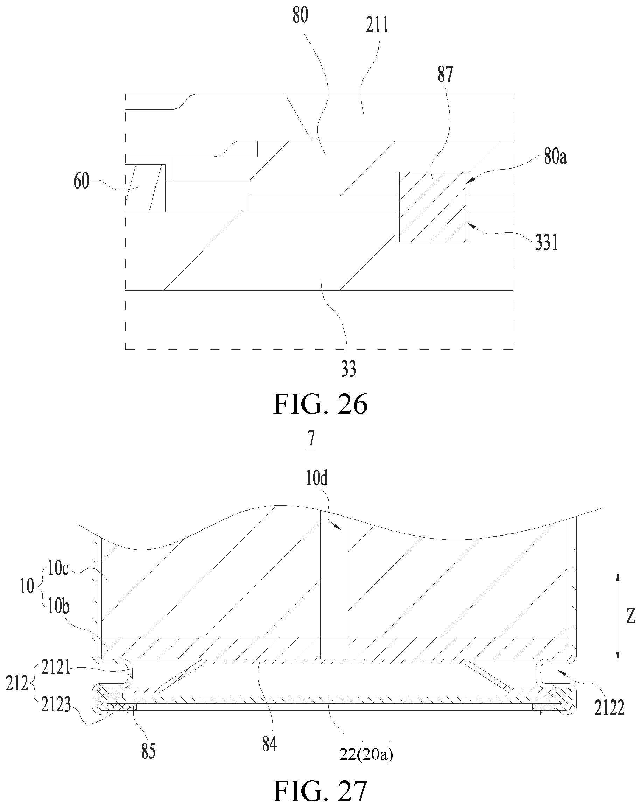

FIG. 25 is a partial cross-sectional view of a battery cell according to some other embodiments of the present application; and FIG. 26 is an enlarged schematic diagram of a block in FIG. 25.

In some embodiments, the battery cell further includes a fifth insulating member 87. At least a part of the fifth insulating member 87 is disposed between the electrode terminal 30 and the first wall 211. For example, at least a part of the fifth insulating member 87 is disposed between the second limiting portion 33 and the first wall 211.

In some embodiments, a thermal weight loss temperature of the fifth insulating member 87 is greater than or equal to 300°C.

In some embodiments, a material of the fifth insulating member 87 is the same as a material of the first insulating member 40.

In some embodiments, the fifth insulating member 87 may include a ceramic member. For example, the fifth insulating member 87 may be formed by aluminum oxide, titanium oxide, silicon oxide, zirconium oxide, glass, or the like.

In some embodiments, in the thickness direction Z, the fifth insulating member 87 at least partially overlaps the third insulating member 80.

In some embodiments, in the thickness direction Z, at least a part of the fifth insulating member 87 is disposed between the third insulating member 80 and the second limiting portion 33.

In some embodiments, the fifth insulating member 87 is annular. The fifth insulating member 87 is disposed around the terminal body 31. In some other embodiments, a quantity of fifth insulating members 87 is more than one, and the plurality of fifth insulating members 87 are circumferentially spaced apart around the terminal body 31. For example, the fifth insulating member 87 is a ceramics column.

In some embodiments, a fifth concave portion 80a is disposed on one side of the third insulating member 80 that faces the second limiting portion 33, and a sixth concave portion 331 is disposed on one side of the second limiting portion 33 that faces the third insulating member 80; and one part of the fifth insulating member 87 is accommodated in the fifth concave portion 80a, and the other part of the fifth insulating member 87 is accommodated in the sixth concave portion 331.

The fifth concave portion 80a and the sixth concave portion 331 may position the fifth insulating member 87.

FIG. 27 is a partial cross-sectional view of a battery cell according to some other embodiments of the present application.

Referring to FIG. 27, in some embodiments, the side wall 212 is provided with an inward protruding convex portion 2121. In the thickness direction Z of the first wall 211, at least a part of the convex portion 2121 is located between the end cap 22 and the second tab 10b.

For example, the convex portion 2121 may have a solid structure, or may have a hollow structure.

The convex portion 2121 overlaps the second tab 10b in the thickness direction Z, which can limit movement of the second tab 10b along the thickness direction Z when the battery cell 7 is subject to an external impact, to reduce a risk of failure of connection between the second tab 10b and the second current collecting member 84.

In some embodiments, the second current collecting member 84 is connected to the convex portion 2121. For example, the second current collecting member 84 may be welded to the convex portion 2121. Alternatively, the second current collecting member 84 may be crimped to the convex portion 2121.

For example, the second current collecting member 84 is connected to one side of the convex portion 2121 that faces the second tab 10b, or may be connected to one side of the convex portion 2121 that faces the end cap 22.

The second current collecting member 84 is connected to the convex portion 2121, so that a conduction path between the second tab 10b and the first wall 211 can be shortened, resistance is reduced, heat generation is reduced, and cycle performance of the battery cell 7 is improved.

In some embodiments, a part of the second current collecting member 84 is located on one side of the convex portion 2121 that faces the end cap 22 and is connected to the convex portion 2121. The second current collecting member 84 is connected to the convex portion 2121 from an outer side of the convex portion 2121. This can reduce assembly difficulty.

In some embodiments, the second current collecting member 84 is welded to the convex portion 2121.

In some embodiments, a second concave portion 2122 is disposed on an outer side of the side wall 212, and the second concave portion 2122 corresponds to a position of the convex portion 2121. For example, after the electrode assembly 10 is mounted in the shell 21, the side wall 212 is pressed from the outer side, to form the convex portion 2121 that protrudes inward.

In some embodiments, the side wall 212 further includes a crimping portion 2123. The crimping portion 2123 extends from one end of the convex portion 2121 that is away from the first wall 211 and is disposed around the end cap 22.

A part of the crimping portion 2123 is disposed to be bent and forms a flanged structure. In the thickness direction Z, a part of the end cap 22 is located between the flanged structure and the convex portion 2121. The convex portion 2121 and the flanged structure may limit the end cap 22, to fix the end cap 22 in the thickness direction Z.

In some embodiments, the battery cell 7 further includes a fourth insulating member 85. The fourth insulating member 85 is disposed between the side wall 212 and the end cap 22 and insulates the end cap 22 from the side wall 212.

In some embodiments, a part of the fourth insulating member 85 is located between the second current collecting member 84 and the end cap 22, to insulate the second current collecting member 84 from the end cap 22.

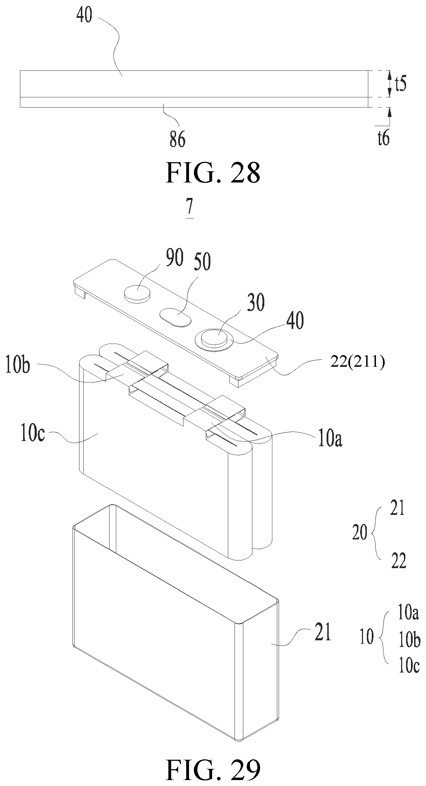

FIG. 28 is a schematic diagram of a first insulating member and a bonding layer that are of a battery cell according to some embodiments of the present application.

Referring to FIG. 12 and FIG. 28, in some embodiments, the battery cell 7 further includes a bonding layer 86.

In some embodiments, the first insulating member 40 is bonded to a surface of the first wall 211 through the bonding layer 86.

In some other embodiments, the first insulating member 40 is bonded to a surface of the electrode terminal 30 through the bonding layer 86.

In some other embodiments, the bonding layer 86 is disposed on two sides of the first insulating member 40. The first insulating member 40 is bonded to the surface of the first wall 211 through the bonding layer 86 on one side of the first insulating member 40, and the first insulating member 40 is bonded to the surface of the first wall 211 through the bonding layer 86 on the other side of the first insulating member 40.

The first insulating member 40 may be fixed through the bonding layer 86, to reduce a risk of offset of the first insulating member 40 in a use process of the battery cell 7.

In some embodiments, a thickness t5 of the first insulating member 40 is greater than or equal to a thickness t6 of the bonding layer 86.

Compared with the bonding layer 86, the first insulating member 40 may have a relatively large thickness, to reduce a risk that the first insulating member 40 is cracked and penetrated, and improve insulation reliability.

In some embodiments, a ratio of the thickness t5 of the first insulating member 40 to the thickness t6 of the bonding layer 86 is 1 to 5.

t5/t6 may be 1, 1.5, 2, 2.5, 3, 3.5, 4, 4.5, or 5.

In the embodiments of the present application, t5/t6 is limited to be greater than or equal to 1, so that the first insulating member 40 may have a relatively large thickness, to reduce a risk that the first insulating member 40 is cracked and penetrated, and improve the insulation reliability. t5/t6 is limited to be less than or equal to 5, so that the bonding layer 86 has a relatively high bonding strength, to reduce a risk that the first insulating member 40 falls out.

In some embodiments, 5 µm≤t5≤100 µm. Optionally, t5 is 5 µm, 10 µm, 15 µm, 20 µm, 25 µm, 30 µm, 35 µm, 40 µm, 45 µm, 50 µm, 55 µm, 60 µm, 65 µm, 70 µm, 75 µm, 80 µm, 85 µm, 90 µm, 95 µm, or 100 µm.

In some embodiments, 20 µm≤t5≤60 µm. Optionally, 25 µm≤t5≤50 µm.

In some embodiments, 3 µm≤t6≤80 µm. Optionally, t6 is 3 µm, 5 µm, 10 µm, 15 µm, 20 µm, 25 µm, 30 µm, 35 µm, 40 µm, 45 µm, 50 µm, 55 µm, 60 µm, 65 µm, 70 µm, 75 µm, or 80 µm.

In some embodiments, 15 µm≤t6≤50 µm.

In some embodiments, the bonding layer 86 includes a thermosetting material. Optionally, the bonding layer 86 includes thermosetting phenolic resin.

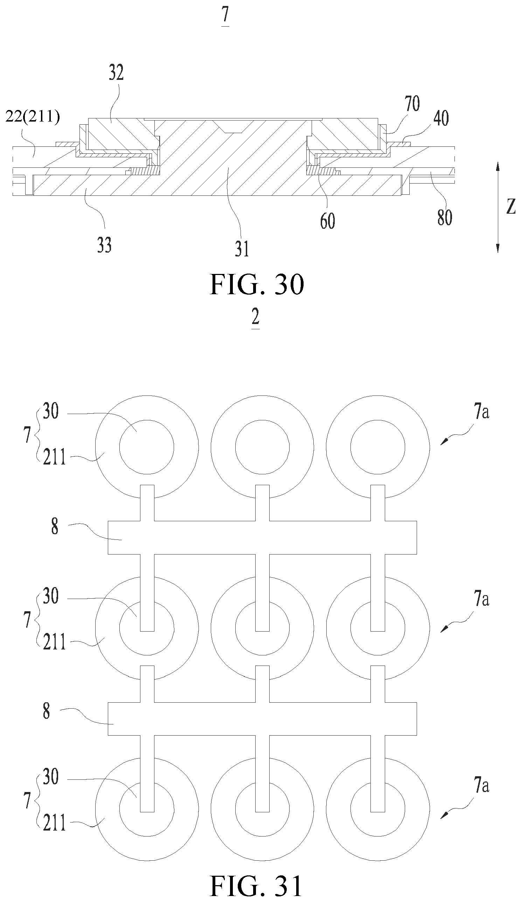

FIG. 29 is a schematic exploded view of a battery cell according to some other embodiments of the present application; and FIG. 30 is a partial cross-sectional view of a battery cell according to some other embodiments of the present application.

Referring to FIG. 29 and FIG. 30, in some embodiments, the battery cell 7 is a square-housing battery cell. For example, the side wall 212 is a square cylinder.

In some embodiments, the housing 20 includes a shell 21 and an end cap 22, the shell 21 includes the second wall 20a and the side wall 212 that are integrally formed, the end cap 22 is the first wall 211, and the end cap 22 is sealingly connected to the side wall 212.

In some embodiments, the second limiting portion 33 and the terminal body 31 are integrally formed, and the first limiting portion 32 is riveted to the terminal body 31.

In some embodiments, the battery cell 7 may include an electrode lead-out portion 90 disposed on the end cap 22, and the electrode lead-out portion 90 is electrically connected to the second tab 10b and the end cap 22. The electrode lead-out portion 90 and the electrode terminal 30 may be used as two electrodes of the battery cell 7.

In some embodiments, the second tab 10b may be a positive tab 1111, and a material of the end cap 22 may be aluminum or an aluminum alloy. The second tab 10b is electrically connected to the end cap 22, so that the end cap 22 can be at a high potential, and a risk that the end cap 22 is corroded by the electrolyte solution is reduced.

In some other embodiments, the second tab 10b may be a negative tab 1211, and a material of the end cap 22 may be steel.

FIG. 31 is a simplified schematic diagram of a battery device according to some other embodiments of the present application.

Referring to FIG. 31, the present application further provides a battery device 2, including a plurality of battery cells 7 according to any one of the foregoing embodiments.

In some embodiments, the battery device 2 further includes a plurality of bus components 8, and the plurality of bus components 8 electrically connect the plurality of battery cells 7.

In some embodiments, at least two battery cells 7 are connected in parallel.

For example, at least two battery cells 7 are connected in parallel to form a battery unit 7a, and a plurality of battery units 7a are connected in series. The plurality of battery cells 7 of the battery device 2 form a multi-parallel series structure. The multi-parallel series structure can improve reliability. When a battery cell 7 fails due to an accident (for example, thermal runaway), a battery cell 7 connected in parallel with the battery cell 7 can still normally operate, to reduce a risk of a complete failure of an entire circuit.

During thermal runaway of a battery cell 7, a normal battery cell 7 connected in parallel with the battery cell 7 that undergoes thermal runaway may be separately electrically connected to the first wall 211 of the battery cell 7 that undergoes thermal runaway and the electrode terminal 30 of the battery cell 7 that undergoes thermal runaway. The first insulating member 40 can suppress a current between the electrode terminal 30 and the first wall 211, reduce continuous heat generation of the electrode terminal 30 and the first wall 211, reduce thermal impact on another surrounding battery cell 7, reduce a risk that the another battery cell 7 undergoes thermal runaway, and improve reliability.

According to some embodiments of the present application, the present application further provides an electric device, including the battery cell 7 according to any one of the foregoing embodiments, where the battery cell 7 is configured to provide electric energy for the electric device. The electric device may be any device or system in which the foregoing battery cell 7 is used.

Referring to FIG. 4 to FIG. 14, an embodiment of the present application provides a cylindrical battery cell, including a housing 20, an electrode terminal 30, an electrode assembly 10, a first insulating member 40, a second insulating member 70, a third insulating member 80, and a sealing member 60.

The housing 20 includes a shell 21 and an end cap 22. The shell 21 includes a side wall 212 and a first wall 211 that are integrally formed, the side wall 212 surrounds the electrode assembly 10, the first wall 211 corresponds to the end cap 22, and the end cap 22 is sealingly connected to the side wall 212.

The electrode assembly 10 is accommodated in the housing 20. The electrode assembly 10 includes a first tab 10a and a second tab 10b, the first tab 10a is electrically connected to the electrode terminal 30, and the second tab 10b is electrically connected to the first wall 211.

The first wall 211 is provided with an electrode lead-out hole 2111. The electrode terminal 30 includes a terminal body 31, a first limiting portion 32, and a second limiting portion 33. At least a part of the terminal body 31 is accommodated in the electrode lead-out hole 2111. The first limiting portion 32 is connected to the terminal body 31, and at least a part of the first limiting portion 32 protrudes from an outer peripheral surface of the terminal body 31. The second limiting portion 33 is connected to the terminal body 31, and at least a part of the second limiting portion 33 protrudes from an outer peripheral surface of the terminal body 31. In the thickness direction Z of the first wall 211, the first limiting portion 32 and the second limiting portion 33 are respectively located on two sides of the first wall 211.

The second insulating member 70 surrounds the terminal body 31, and at least a part of the second insulating member 70 is disposed between the first limiting portion 32 and the first wall 211. The sealing member 60 surrounds the terminal body 31, and at least a part of the sealing member 60 is disposed between the second limiting portion 33 and the first wall 211. At least a part of the third insulating member 80 surrounds an outer side of the sealing member 60 and is located between the second limiting portion 33 and the first wall 211.

The first insulating member 40 is bonded to an outer surface 2112 of the first wall 211, and at least a part of the second insulating member 70 is clamped between the electrode terminal 30 and the first insulating member 40.

A thermal weight loss temperature of the first insulating member 40 is greater than or equal to 300°C.

It should be noted that the embodiments in the present application and features in the embodiments may be combined with each other without conflicts.

Finally, it should be noted that the foregoing embodiments are merely used for illustrating rather than limiting the technical solutions of the present application. Although the present application is illustrated in detail with reference to the foregoing embodiments, those of ordinary skill in the art should understand that they can still modify the technical solutions described in the foregoing embodiments, or make equivalent substitutions to some of the technical features therein, but these modifications or substitutions can be made to the respective technical solutions without departing from the spirit and scope of the technical solutions of the embodiments of the present application.

## Claims

1. A battery cell, comprising:
a housing, comprising a first wall and an accommodating cavity, wherein the first wall is provided with an electrode lead-out hole in communication with the accommodating cavity;
an electrode terminal, disposed in the electrode lead-out hole;
an electrode assembly, accommodated in the accommodating cavity, wherein the electrode assembly comprises a first tab and a second tab that have opposite polarities, the first tab is electrically connected to the electrode terminal, and the second tab is electrically connected to the first wall; and
a first insulating member, wherein at least a part of the first insulating member is fixed between the electrode terminal and the first wall, to insulate and isolate at least a part of the electrode terminal from the first wall, and a thermal weight loss temperature of the first insulating member is greater than or equal to 300°C.

2. The battery cell according to claim 1, wherein the thermal weight loss temperature of the first insulating member is greater than or equal to 350°C, and optionally, the thermal weight loss temperature of the first insulating member is greater than or equal to 500°C.

3. The battery cell according to claim 1 or 2, wherein a material of the first insulating member comprises a thermosetting material.

4. The battery cell according to any one of claims 1 to 3, wherein the material of the first insulating member comprises one or more of thermosetting polyimide and a derivative of the thermosetting polyimide.

5. The battery cell according to claim 4, wherein the material of the first insulating member comprises one or more of bismaleimide, ethynyl-terminated polyimide, and norbornene dicarboxylic anhydride-terminated polyimide.

6. The battery cell according to any one of claims 1 to 5, wherein the first insulating member is bonded to at least one of the electrode terminal and the first wall.

7. The battery cell according to claim 6, further comprising a bonding layer, wherein
the first insulating member is bonded to a surface of the first wall through the bonding layer, and/or the first insulating member is bonded to a surface of the electrode terminal through the bonding layer.

8. The battery cell according to claim 7, wherein a thickness of the first insulating member is greater than or equal to a thickness of the bonding layer.

9. The battery cell according to claim 8, wherein a ratio of the thickness of the first insulating member to the thickness of the bonding layer is 1 to 5.

10. The battery cell according to any one of claims 6 to 9, wherein the first insulating member is bonded to the first wall.

11. The battery cell according to any one of claims 1 to 10, wherein in a thickness direction of the first wall, at least a part of the first insulating member is located between an outer surface of the first wall and the electrode terminal; and/or
in the thickness direction of the first wall, at least a part of the first insulating member is located between an inner surface of the first wall and the electrode terminal.

12. The battery cell according to claim 11, wherein the first insulating member comprises a first insulating portion and a second insulating portion connected to the first insulating portion, the first insulating portion is disposed on the outer surface of the first wall, and the second insulating portion is disposed on a hole wall surface of the electrode lead-out hole.

13. The battery cell according to any one of claims 1 to 12, further comprising a second insulating member, wherein
at least a part of the second insulating member is disposed between the first insulating member and the first wall; and/or at least a part of the second insulating member is disposed between the first insulating member and the electrode terminal.

14. The battery cell according to claim 13, wherein a compression modulus of the second insulating member is less than a compression modulus of the first insulating member.

15. The battery cell according to claim 13 or 14, wherein a material of the second insulating member comprises a thermoplastic material.

16. The battery cell according to any one of claims 13 to 15, wherein in the thickness direction of the first wall, at least a part of the first insulating member and at least a part of the second insulating member are stacked between the first wall and the electrode terminal.

17. The battery cell according to claim 16, wherein in the thickness direction of the first wall, at least a part of the second insulating member is disposed between the first insulating member and the electrode terminal.

18. The battery cell according to claim 17, wherein the electrode terminal comprises a terminal body, a first limiting portion, and a second limiting portion, at least a part of the terminal body is accommodated in the electrode lead-out hole, both the first limiting portion and the second limiting portion are connected to the terminal body, at least a part of the first limiting portion protrudes from an outer peripheral surface of the terminal body, and at least a part of the second limiting portion protrudes from the outer peripheral surface of the terminal body;
at least a part of the first insulating member is attached to a surface of the first wall that faces the first limiting portion; and
in the thickness direction of the first wall, the first limiting portion and the second limiting portion are respectively located on two sides of the first wall, and at least a part of the second insulating member is disposed between the first limiting portion and the first insulating member.

19. The battery cell according to claim 18, wherein the electrode terminal is riveted to the first wall; and the first limiting portion is configured to be formed after the electrode terminal passes through the electrode lead-out hole.

20. The battery cell according to any one of claims 16 to 19, wherein in the thickness direction of the first wall, a minimum thickness of the part of the first insulating member that is located between the first wall and the electrode terminal is t1, a minimum thickness of the part of the second insulating member that is located between the first wall and the electrode terminal is t2, and t2 is greater than t1.

21. The battery cell according to any one of claims 1 to 20, further comprising a pressure relief mechanism disposed in the housing.

22. The battery cell according to claim 21, wherein the pressure relief mechanism comprises a pressure relief portion and a weak portion disposed around an outer periphery of the pressure relief portion; and
an area of the pressure relief portion is greater than an area of the electrode lead-out hole.

23. The battery cell according to claim 21 or 22, wherein the housing comprises a second wall, and the pressure relief mechanism is disposed on the second wall.

24. The battery cell according to claim 23, wherein the pressure relief mechanism comprises the pressure relief portion and the weak portion disposed around the outer periphery of the pressure relief portion;
an area of a region enclosed by an outer contour of a projection of the second wall along a thickness direction of the second wall is S1, and an area of a projection of the pressure relief portion in the thickness direction of the second wall is S2; and $0.1 \leq S 2 / S 1 \leq 0.8 .$

25. The battery cell according to claim 24, wherein 0.3≤S2/S1≤0.7.

26. The battery cell according to any one of claims 23 to 25, wherein the battery cell is a cylindrical battery cell, and the first wall and the second wall are disposed opposite to each other along an axial direction of the cylindrical battery cell;
the pressure relief mechanism comprises the pressure relief portion and the weak portion disposed around the outer periphery of the pressure relief portion, and the pressure relief portion is in a shape of a circle; and
a diameter ϕ1 of the pressure relief portion and a diameter ϕ2 of the cylindrical battery cell satisfy the following relationship: $0.35 \leq ϕ 1 / ϕ 2 \leq 0.85 .$

27. The battery cell according to any one of claims 23 to 26, wherein a thickness of the first wall is greater than a thickness of the second wall.

28. The battery cell according to any one of claims 23 to 27, wherein the first wall and the second wall are respectively located on two sides of the electrode assembly; and
the housing further comprises a side wall, the side wall surrounds the electrode assembly, and the side wall is connected to the first wall and the second wall.

29. The battery cell according to claim 28, wherein the thickness of the first wall is greater than a thickness of the side wall.

30. The battery cell according to claim 28 or 29, wherein the housing comprises a shell and an end cap, the shell comprises the first wall and the side wall that are integrally formed, the end cap is the second wall, and the end cap is sealingly connected to the side wall.

31. The battery cell according to any one of claims 28 to 30, wherein a center of the electrode assembly is provided with a first through hole; and
along an extension direction of the first through hole, the first through hole is provided between the electrode terminal and the pressure relief mechanism.

32. The battery cell according to any one of claims 28 to 31, wherein the first tab is disposed at one end of the electrode assembly that faces the first wall, and the second tab is disposed at one end of the electrode assembly that faces the second wall; and
the battery cell further comprises a first current collecting member and a second current collecting member, the first current collecting member is connected to the first tab and the electrode terminal, the second tab is connected to the second current collecting member, and at least one of the side wall and the second wall is connected to the second current collecting member, to enable the side wall to be electrically connected to the first wall and the second current collecting member.

33. The battery cell according to claim 32, wherein the second current collecting member is connected to the second wall.

34. The battery cell according to any one of claims 1 to 33, wherein the electrode terminal comprises the terminal body and the first limiting portion, at least a part of the terminal body is accommodated in the electrode lead-out hole, the first limiting portion is connected to the terminal body, and at least a part of the first limiting portion protrudes from the outer peripheral surface of the terminal body; and
in the thickness direction of the first wall, the first limiting portion at least partially overlaps the first wall, and at least a part of the first insulating member is located between the first wall and the first limiting portion.

35. The battery cell according to claim 34, wherein the electrode terminal further comprises the second limiting portion connected to the terminal body, at least a part of the second limiting portion protrudes from the outer peripheral surface of the terminal body, and in the thickness direction of the first wall, the first limiting portion and the second limiting portion are respectively located on the two sides of the first wall;
the battery cell comprises a sealing member, and in the thickness direction of the first wall, at least a part of the sealing member is disposed between the second limiting portion and the first wall; and
a thermal weight loss temperature of the sealing member is greater than or equal to 200°C.

36. The battery cell according to claim 35, wherein the sealing member comprises the thermosetting material.

37. The battery cell according to claim 35 or 36, wherein a part of the sealing member and a part of the first insulating member are stacked in the thickness direction of the first wall, to separate the hole wall surface of the electrode lead-out hole from the terminal body.

38. The battery cell according to any one of claims 35 to 37, wherein the sealing member comprises a first sealing portion and a second sealing portion that are connected, at least a part of the first sealing portion is located between the second limiting portion and the first wall, and at least a part of the second sealing portion is located in the electrode lead-out hole; and
the first insulating member comprises the first insulating portion and the second insulating portion that are connected, at least a part of the first insulating portion is located between the first limiting portion and the first wall, at least a part of the second insulating portion is located in the electrode lead-out hole, and in a radial direction of the electrode lead-out hole, the second insulating portion at least partially overlaps the second sealing portion in the electrode lead-out hole.

39. The battery cell according to any one of claims 1 to 38, wherein the electrode assembly comprises a positive electrode plate, the positive electrode plate comprises a positive electrode current collector and a positive electrode film layer disposed on at least one side of the positive electrode current collector, the positive electrode film layer comprises a positive electrode active material, and the positive electrode active material comprises a layered transition metal oxide; and
the layered transition metal oxide comprises at least one of a compound with a formula of LiₐNi_{b}Co_{c}M_{d}OₑA_{f} and a modified compound of the layered transition metal oxide, 0.8≤a≤1.2, 0.8≤b≤0.95, 0<c<1, 0<d<1, 1≤e≤2, and 0≤f≤1, M comprises at least one of Mn, Al, Zr, Zn, Cu, Cr, Mg, Fe, V, Ti, and B, and A comprises at least one of N, F, S, and Cl.

40. The battery cell according to any one of claims 1 to 39, further comprising an electrolyte solution accommodated in the housing; and
the electrolyte solution comprises a linear ester solvent, and a mass percentage of the linear ester solvent in the electrolyte solution ranges from 25.5 wt% to 76.5 wt%.

41. The battery cell according to claim 40, wherein the mass percentage of the linear ester solvent in the electrolyte solution ranges from 42.5 wt% to 70 wt%.

42. The battery cell according to any one of claims 1 to 41, wherein thermal conductivity of the first insulating member is less than thermal conductivity of the first wall, and the thermal conductivity of the first insulating member is less than thermal conductivity of the electrode terminal.

43. The battery cell according to claim 42, wherein the thermal conductivity of the first wall is less than the thermal conductivity of the electrode terminal.

44. The battery cell according to any one of claims 1 to 43, wherein the battery cell is a cylindrical battery cell, and a diameter of the cylindrical battery cell is greater than or equal to 35 mm and less than or equal to 70 mm.

45. A battery device, comprising a plurality of battery cells according to any one of claims 1 to 44.

46. The battery device according to claim 45, wherein at least two of the battery cells are connected in parallel.

47. An electric device, comprising the battery device according to claim 45 or 46, wherein the battery device is configured to supply electric energy.
